(19)

Europäisches
Patentamt
European
Patent Office
Office européen
des brevets

(11) **EP 4 280 674 A1**

(12) **EUROPEAN PATENT APPLICATION**
published in accordance with Art. 153(4) EPC

(43) Date of publication:
**22.11.2023 Bulletin 2023/47**

(21) Application number: **22739808.8**

(22) Date of filing: **17.01.2022**

(51) International Patent Classification (IPC):
**H04W 28/02** (2009.01)    **H04W 28/26** (2009.01)
**H04W 72/02** (2009.01)    **H04W 74/08** (2009.01)
**H04W 76/28** (2018.01)    **H04W 4/40** (2018.01)
**H04W 92/18** (2009.01)

(52) Cooperative Patent Classification (CPC):
**H04W 4/40; H04W 28/02; H04W 28/26;
H04W 72/02; H04W 74/08; H04W 76/28;
H04W 92/18**

(86) International application number:
**PCT/KR2022/000819**

(87) International publication number:
**WO 2022/154616 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.01.2021 US 202163138518 P
18.01.2021 KR 20210006875**

(71) Applicant: **LG Electronics Inc.**
**Yeongdeungpo-gu**
**Seoul 07336 (KR)**

(72) Inventor: **LEE, Seungmin**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD AND DEVICE FOR OBTAINING CBR VALUE ON BASIS OF PARTIAL SENSING IN NR V2X**

(57)     In an embodiment, a method for performing wireless communication by a first device is proposed. The method may comprise the steps of determining at least one candidate slot for selecting a sidelink (SL) resource, performing sensing with respect to at least one first slot associated with the at least one candidate slot, receiving, on the basis of at least one second slot, at least one physical sidelink control channel (PSCCH) and at least one physical sidelink shared channel (PSSCH), and obtaining a channel busy ratio (CBR) on the basis of an SL received signal strength indicator (RSSI) with respect to the at least one first slot and the at least one second slot.

FIG. 12

EP 4 280 674 A1

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

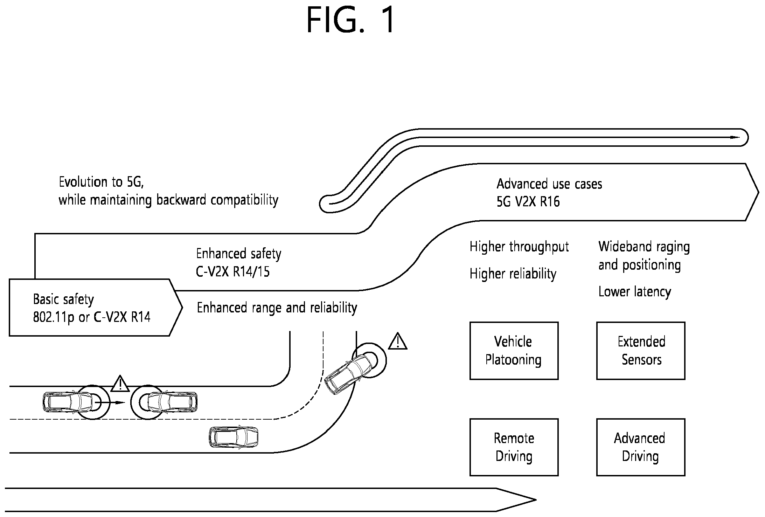

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

**DISCLOSURE**

**TECHNICAL PROBLEM**

Meanwhile, in sidelink communications, an operation related to congestion control may be required for a UE performing a power saving operation (P-UE). That is, for example, in order for the derivation/calculation of a channel busy ratio (CBR) value, it is necessary to configure for the P-UE performing partial sensing, with respect to slots performing a sidelink (SL) received signal strength indicator (RSSI) measurement.

**TECHNICAL SOLUTION**

Based on an embodiment of the present disclosure, a method for a first device to perform wireless communication is proposed. The method comprises: determining at least one candidate slot for selecting a sidelink (SL) resource; performing sensing on at least one first slot related to the at least one candidate slot; receiving at least one physical sidelink shared channel (PSCCH) and at least one physical sidelink shared channel (PSSCH) based on at least one second slot; and obtaining a channel busy ratio (CBR) value based on SL received signal strength indicator (RSSI) measured on the at least one first slot and the at least one second slot.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

Based on an embodiment of the present disclosure, an apparatus adapted to control a first UE may be provided. For example, the apparatus may comprise: one or more processors; and one or more memories operably connected to the one or more processors and storing instructions. For example, the one or more processors may execute the instructions to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

Based on an embodiment of the present disclosure, a non-transitory computerreadable storage medium storing instructions may be provided. For example, the instructions, when executed, may cause a first device to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

Based on an embodiment of the present disclosure, a method for performing wireless communication by a first device is provided. The method may comprise: transmitting, to a first device, at least one physical sidelink shared channel (PSCCH) and at least one physical sidelink shared channel (PSSCH) based on at least one second slot. For example, at least one candidate slot for selecting a sidelink (SL) resource may be determined. For example, sensing on at least one first slot related to the at least one candidate slot may be performed. For example, a channel busy ratio (CBR) value may be obtained based on SL received signal strength indicator (RSSI) measured on the at least one first slot and the at least one second slot.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: transmit, to a first device, at least one physical sidelink shared channel (PSCCH) and at least one physical sidelink shared channel (PSSCH) based on at least one second slot. For example, at least one candidate slot for selecting a sidelink (SL) resource may be determined. For example, sensing on at least one first slot related to the at least one candidate slot may be performed. For example, a channel busy ratio (CBR) value may be obtained based on SL received signal strength indicator (RSSI) measured on the at least one first slot and the at least one second slot.

## ADVANTAGEOUS EFFECTS

A UE performing partial sensing can efficiently measure the channel busy ratio (CBR).

## BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a method in which a UE that has reserved transmission resource(s) informs another UE of the transmission resource(s), based on an embodiment of the present disclosure.
FIG. 11 shows a resource unit for CBR measurement based on an embodiment of the present disclosure.
FIG. 12 shows a procedure for a first UE to obtain a CBR value, based on an embodiment of the present disclosure.
FIG. 13 shows an example of measuring CBR, based on an embodiment of the present disclosure.
FIG. 14 shows another example of measuring CBR, based on an embodiment of the present disclosure.
FIG. 15 shows a method for a first device to obtain a CBR value, based on an embodiment of the present disclosure.
FIG. 16 shows a method for a second device to transmit at least one PSCCH and at least one PSSCH, based on an embodiment of the present disclosure.

FIG. 17 shows a communication system 1, based on an embodiment of the present disclosure.

FIG. 18 shows wireless devices, based on an embodiment of the present disclosure.

FIG. 19 shows a signal process circuit for a transmission signal, based on an embodiment of the present disclosure.

FIG. 20 shows another example of a wireless device, based on an embodiment of the present disclosure.

FIG. 21 shows a hand-held device, based on an embodiment of the present disclosure.

FIG. 22 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

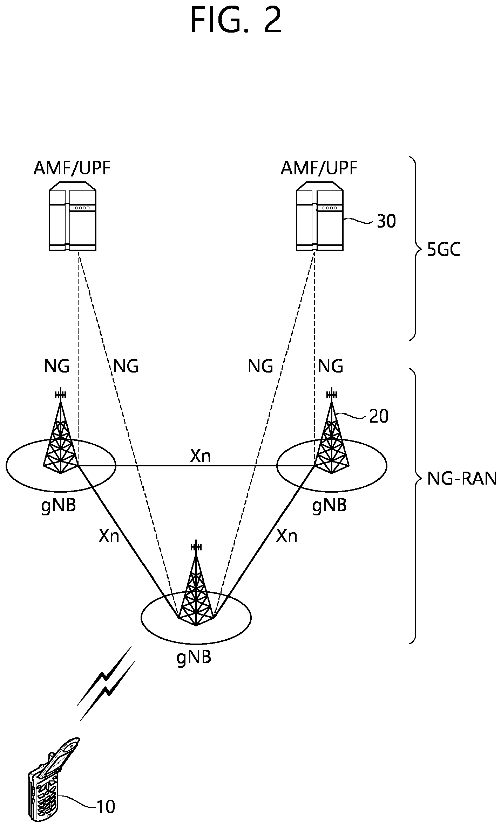

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

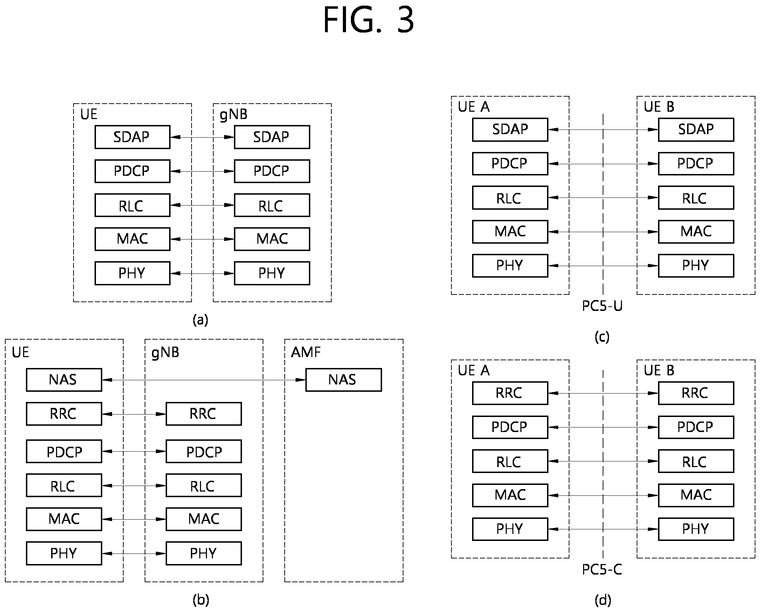

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

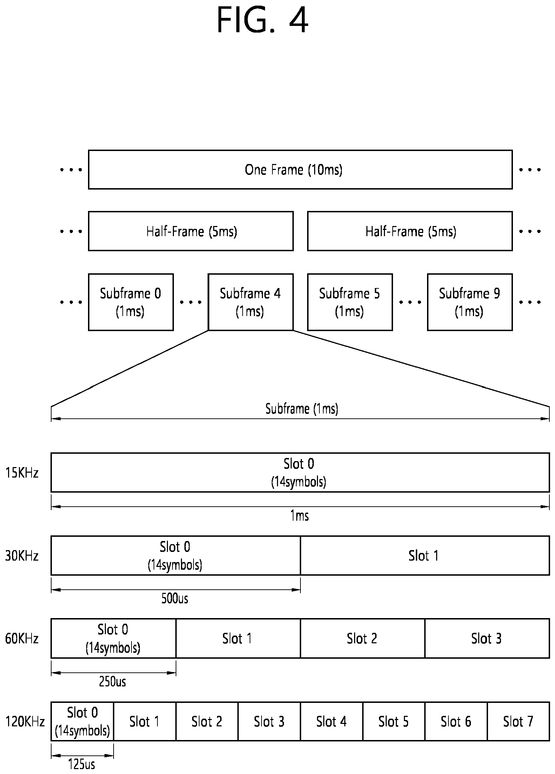

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

Table 2

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

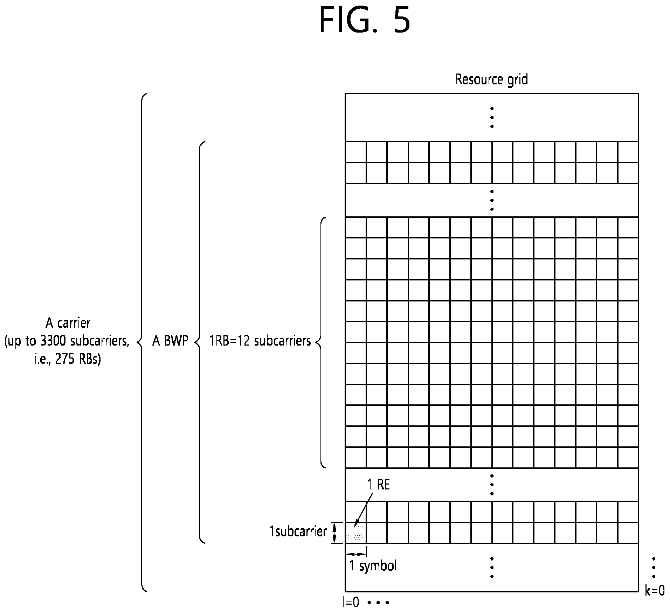

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

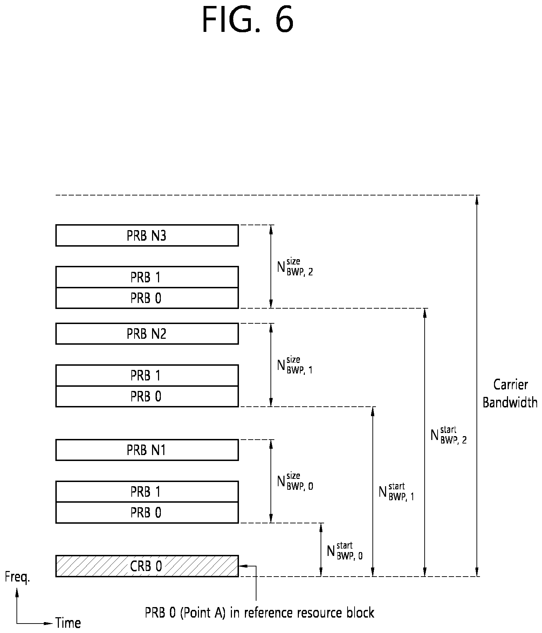

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

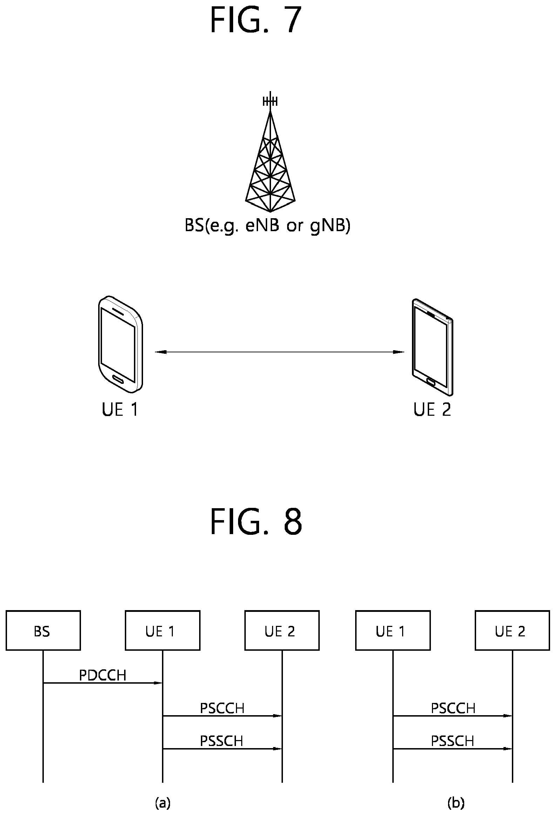

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (e.g., downlink control information (DCI)) or RRC signaling (e.g., Configured Grant Type 1 or Configured Grant Type 2), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

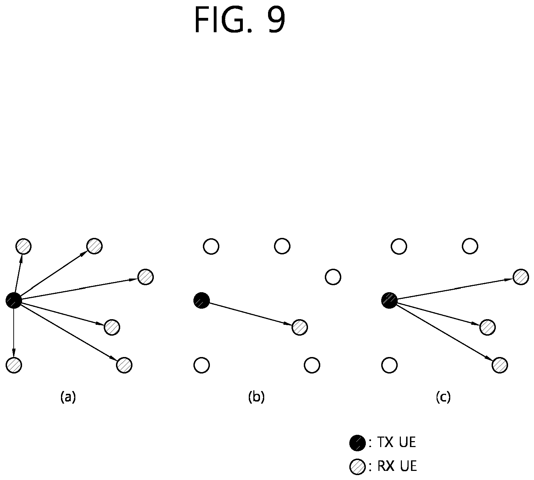

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the present disclosure, for example, a transmitting UE (TX UE) may be a UE which transmits data to a (target) receiving UE (RX UE). For example, the TX UE may be a UE which performs PSCCH transmission and/or PSSCH transmission. Additionally/alternatively, for example, the TX UE may be a UE which transmits SL CSI-RS(s) and/or a SL CSI report request indicator to the (target) RX UE. Additionally/alternatively, for example, the TX UE may be a UE which transmits a (control) channel (e.g., PSCCH, PSSCH, etc.) and/or reference signal(s) on the (control) channel (e.g., DM-RS, CSI-RS, etc.), to be used for a SL RLM operation and/or a SL RLF operation of the (target) RX UE.

Meanwhile, in the present disclosure, for example, a receiving UE (RX UE) may be a UE which transmits SL HARQ feedback to a transmitting UE (TX UE) based on whether decoding of data received from the TX UE is successful and/or whether detection/decoding of a PSCCH (related to PSSCH scheduling) transmitted by the TX UE is successful. Additionally/alternatively, for example, the RX UE may be a UE which performs SL CSI transmission to the TX UE based on SL CSI-RS(s) and/or a SL CSI report request indicator received from the TX UE. Additionally/alternatively, for example, the RX UE is a UE which transmits a SL (L1) reference signal received power (RSRP) measurement value, to the TX UE, measured based on (pre-defined) reference signal(s) and/or a SL (L1) RSRP report request indicator received from the TX UE. Additionally/alternatively, for example, the RX UE may be a UE which transmits data of the RX UE to the TX UE. Additionally/alternatively, for example, the RX UE may be a UE which performs a SL RLM operation and/or a SL RLF operation based on a (pre-configured) (control) channel and/or reference signal(s) on the (control) channel received from the TX UE.

Meanwhile, in the present disclosure, for example, in case the RX UE transmits SL HARQ feedback information for a PSSCH and/or a PSCCH received from the TX UE, the following options or some of the following options may be considered. Herein, for example, the following options or some of the following options may be limitedly applied only if the RX UE successfully decodes/detects a PSCCH scheduling a PSSCH.

> (1) groupcast option 1: no acknowledgement (NACK) information may be transmitted to the TX UE only if the RX UE fails to decode/receive the PSSCH received from the TX UE.
> (2) groupcast option 2: If the RX UE succeeds in decoding/receiving the PSSCH received from the TX UE, ACK information may be transmitted to the TX UE, and if the RX UE fails to decode/receive the PSSCH, NACK information may be transmitted to the TX UE.

Meanwhile, in the present disclosure, for example, the TX UE may transmit the following information or some of the following information to the RX UE through SCI(s). Herein, for example, the TX UE may transmit some or all of the following information to the RX UE through a first SCI and/or a second SCI.

- PSSCH (and/or PSCCH) related resource allocation information (e.g., the location/number of time/frequency resources, resource reservation information (e.g., period))
- SL CSI report request indicator or SL (L1) reference signal received power (RSRP) (and/or SL (L1) reference signal received quality (RSRQ) and/or SL (L1) reference signal strength indicator (RSSI)) report request indicator
- SL CSI transmission indicator (or SL (L1) RSRP (and/or SL (L1) RSRQ and/or SL (L1) RSSI) information transmission indicator) (on a PSSCH)
- Modulation and Coding Scheme (MCS) information
- TX power information
- L1 destination ID information and/or L1 source ID information
- SL HARQ process ID information
- New Data Indicator (NDI) information
- Redundancy Version (RV) information
- (Transmission traffic/packet related) QoS information (e.g., priority information)
- SL CSI-RS transmission indicator or information on the number of antenna ports for (transmitting) SL CSI-RS
- TX UE location information or location (or distance range) information of the target RX UE (for which SL HARQ feedback is requested)

- Reference signal (e.g., DM-RS, etc.) information related to decoding (and/or channel estimation) of data transmitted through a PSSCH. For example, information related to a pattern of (time-frequency) mapping resources of DM-RS(s), RANK information, antenna port index information, information on the number of antenna ports, etc.

Meanwhile, in the present disclosure, for example, since the TX UE may transmit a SCI, a first SCI and/or a second SCI to the RX UE through a PSCCH, the PSCCH may be replaced/substituted with the SCI and/or the first SCI and/or the second SCI. Additionally/alternatively, the SCI may be replaced/substituted with the PSCCH and/or the first SCI and/or the second SCI. Additionally/alternatively, for example, since the TX UE may transmit a second SCI to the RX UE through a PSSCH, the PSSCH may be replaced/substituted with the second SCI.

Meanwhile, in the present disclosure, for example, if SCI configuration fields are divided into two groups in consideration of a (relatively) high SCI payload size, the first SCI including a first SCI configuration field group may be referred to as a 1st SCI, and the second SCI including a second SCI configuration field group may be referred to as a 2nd SCI. Also, for example, the 1st SCI may be transmitted to the receiving UE through a PSCCH. Also, for example, the 2nd SCI may be transmitted to the receiving UE through a (independent) PSCCH or may be piggybacked and transmitted together with data through a PSSCH.

Meanwhile, in the present disclosure, for example, the term "configure/configured" or the term "define/defined" may refer to (pre)configuration from a base station or a network (through pre-defined signaling (e.g., SIB, MAC, RRC, etc.)) (for each resource pool).

Meanwhile, in the present disclosure, for example, since an RLF may be determined based on out-of-synch (OOS) indicator(s) or in-synch (IS) indicator(s), the RLF may be replaced/substituted with out-of-synch (OOS) indicator(s) or in-synch (IS) indicator(s).

Meanwhile, in the present disclosure, for example, an RB may be replaced/substituted with a subcarrier. Also, in the present disclosure, for example, a packet or a traffic may be replaced/substituted with a TB or a MAC PDU based on a transmission layer.

Meanwhile, in the present disclosure, a CBG may be replaced/substituted with a TB.

Meanwhile, in the present disclosure, for example, a source ID may be replaced/substituted with a destination ID.

Meanwhile, in the present disclosure, for example, an L1 ID may be replaced/substituted with an L2 ID. For example, the L1 ID may be an L1 source ID or an L1 destination ID. For example, the L2 ID may be an L2 source ID or an L2 destination ID.

Meanwhile, in the present disclosure, for example, an operation of the transmitting UE to reserve/select/determine retransmission resource(s) may include: an operation of the transmitting UE to reserve/select/determine potential retransmission resource(s) for which actual use will be determined based on SL HARQ feedback information received from the receiving UE.

Meanwhile, in the present disclosure, a sub-selection window may be replaced/substituted with a selection window and/or the pre-configured number of resource sets within the selection window, or vice versa.

Meanwhile, in the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. In addition, for example, cast may be replaced/substituted with at least one of unicast, groupcast, and/or broadcast, or vice versa. For example, a cast type may be replaced/substituted with at least one of unicast, groupcast, and/or broadcast, or vice versa.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), QoS profile, QoS parameter and/or requirement, or vice versa.

Meanwhile, in various embodiments of the present disclosure, a reserved resource and/or a selected resource may be replaced with a sidelink grant (SL GRANT).

Meanwhile, in various embodiments of the present disclosure, latency may be replaced with a packet delay budget (PDB).

Meanwhile, in various embodiments of the present disclosure, a message for triggering a report on sidelink channel state information/sidelink channel quality information (hereinafter, SL_CSI information) may be replaced with reception of sidelink channel state information reference signal (CSI-RS).

Meanwhile, in the present disclosure, blind retransmission may refer that the TX UE performs retransmission without receiving SL HARQ feedback information from the RX UE. For example, SL HARQ feedback-based retransmission may refer that the TX UE determines whether to perform retransmission based on SL HARQ feedback information received from the RX UE. For example, if the TX UE receives NACK and/or DTX information from the RX UE, the TX UE may perform retransmission to the RX UE.

Meanwhile, in the present disclosure, for example, for convenience of description, a (physical) channel used when a RX UE transmits at least one of the following information to a TX UE may be referred to as a PSFCH.

- SL HARQ feedback, SL CSI, SL (L1) RSRP

Meanwhile, in the present disclosure, a Uu channel may include a UL channel and/or a DL channel. For example, the UL channel may include a PUSCH, a PUCCH, a sounding reference Signal (SRS), etc. For example, the DL channel may include a PDCCH, a PDSCH, a PSS/SSS, etc. For example, an SL channel may include a PSCCH, a PSSCH, a PSFCH, a PSBCH, a PSSS/SSSS, etc.

Meanwhile, in NR V2X communication or NR sidelink communication, a transmitting UE may reserve/select one or more transmission resources for sidelink transmission (e.g., initial transmission and/or retransmission), and the transmitting UE may transmit information on the location of the one or more transmission resources to receiving UE(s).

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

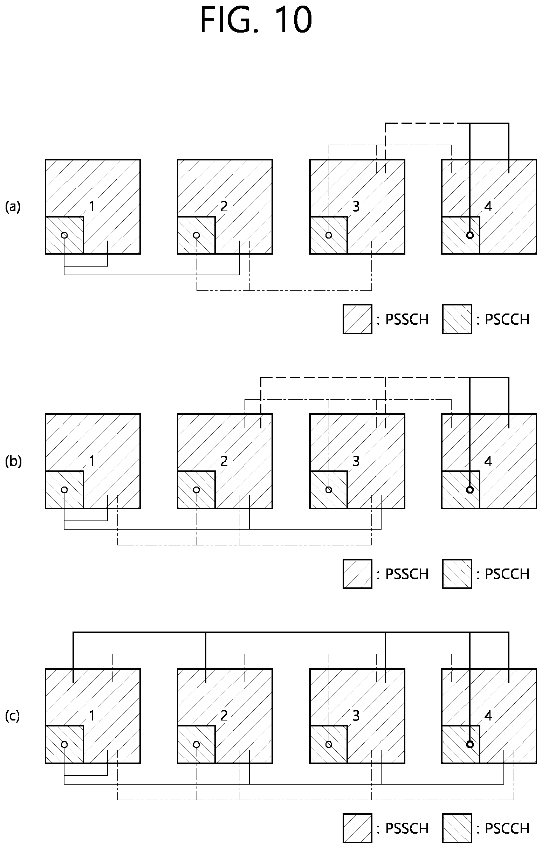

FIG. 10 shows a method in which a UE that has reserved transmission resource(s) informs another UE of the transmission resource(s), based on an embodiment of the present disclosure. The embodiment of FIG. 10 may be combined with various embodiments of the present disclosure.

Specifically, for example, (a) of FIG. 10 shows a method for performing by a transmitting UE chain-based resource reservation by transmitting/signaling location information of (maximum) 2 transmission resources to receiving UE(s) through one SCI, in the case of a value of K = 4. For example, (b) of FIG. 10 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 10, the transmitting UE may transmit/signal only location information of the fourth transmission-related resource to the receiving UE(s) through the fourth (or last) transmission-related PSCCH. For example, referring to (a) of FIG. 10, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 10, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 10, if the transmitting UE may transmit/signal to the receiving UE(s) only location information of the fourth transmission-related resource through the fourth (or last) transmission-related PSCCH, the transmitting UE may set or designate a field/bit of location information of unused or remaining transmission resource(s) to a pre-configured value (e.g., 0). For example, in (a) and (b) of FIG. 10, if the transmitting UE may transmit/signal to the receiving UE(s) only location information of the fourth transmission-related resource through the fourth (or last) transmission-related PSCCH, the transmitting UE may be set or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 10 shows a method for performing by the transmitting UE block-based resource reservation, by signaling location information of 4 transmission resources to receiving UE(s) through one SCI, in the case of a value of K = 4.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prior_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r_i'' - T_3$, where $r_i''$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is defined as slots in Table X1, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where pi is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList $(prio_{TX})$ converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, the UE may select a set of candidate resources $(S_A)$ based on Table 5. For example, if resource (re)selection is triggered, the UE may select a set of candidate resources $(S_A)$ based on Table 11. For example, if re-evaluation or pre-emption is triggered, the UE may select a set of candidate resources $(S_A)$ based on Table 5.

[Table 5]

In sidelink transmission mode 4, when requested by higher layers in subframe $n$ for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{tsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe $n$ for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers.

$C_{resel}$ is determined by $C_{resel}$ =10*SL_RESOURCE_RESELECTION COUNTER, where SL_RESOURCE_ RESELECTION_COUNTER is provided by higher layers.

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j = 0,..., L_{subCH}$ -1. The UE shall determine by its implementation a set of subframes which consists of at least $Y$ subframes within the time interval $[n + T_1, n + T_2]$ where selections of $T_1$ and $T_2$ are up to UE implementations under $T_1 \leq 4$ and $T_{2min}$ ($prio_{TX}$) $\leq T_2 \leq 100$, if $T_{2min}$ ($prio_{TX}$) is provided by higher layers for $prio_{TX}$, otherwise $20 \leq T_2 \leq 100$. UE selection of $T_2$ shall fulfil the latency requirement and $Y$ shall be greater than or equal to the high layer parameter *minNumCandidateSF.*

The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b.$

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prio_{TX},prio_{RX}}$.

(continued)

<table>
<tr><td>

- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with

$R_{x,y+j \times P'_{rsvp\_TX}}$ for $q$=1, 2, ..., $Q$ and $j$=0, 1, ..., $C_{resel}$ -1. Here, $Q = \dfrac{1}{P_{rsvp\_RX}}$ if $P_{rsvp\_RX}$ < 1 and $y' - m \leq P_{step} \times P_{rsvp\_RX} + P_{step}$, where $t_{y'}^{SL}$ is the last subframe of the $Y$ subframes, and $Q$ = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

</td></tr>
</table>

Meanwhile, partial sensing may be supported for power saving of the UE. For example, in LTE SL or LTE V2X, the UE may perform partial sensing based on Tables 6 and 7.

[Table 6]

<table>
<tr><td>

7) For a candidate single-subframe resource $R_{x,y}$ remaining in the set $S_A$, the metric $E_{x,y}$ is defined as the linear average of S-RSSI measured in sub-channels $x+k$ for $k = 0,..., L_{subCH}$ -1 in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j = 0,..., L_{subCH}$ -1. The UE shall assume that any set of $L_{subCH}$ contiguous sub-channels included in the corresponding PSSCH resource pool within the time interval $[n + T_1, n + T_2]$ corresponds to one candidate single-subframe resource, where selections of $T_1$ and $T_2$ are up to UE implementations under $T_1 \leq 4$ and $T_{2min}$ ($prio_{TX}$) $\leq T_2 \leq 100$, if $T_{2min}$ ($prio_{TX}$) is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $SB$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

</td></tr>
</table>

(continued)

| The UE shall report set $S_B$ to higher layers. |
| --- |

[Table 7]

The following steps are used:

1) A candidate single-slot resource for transmission $R_{x,y}$ is defined as a set of $L_{subCH}$ contiguous subchannels with sub-channel x+j in slot $t'^{SL}_y$ where $j = 0,..., L_{subCH}$ - 1. The UE shall assume that any set of $L_{subCH}$ contiguous sub-channels included in the corresponding resource pool within the time interval [$n + T_1, n + T_2$] correspond to one candidate single-slot resource, where

- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP.

The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the z-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot t' ;L in Step 2.

- for any periodicity value allowed by the higher layer parameter *sl-ResourceReservePeriodList* and a hypothetical SCI format 1-A received in slot $t'^{SL}_m$ with '*Resource reservation period*' field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$ , and '*Resource reservation period*' field, if present, and '*Priority*' field in the received SCI format 1-A indicate the values $P_{rsvp\_RX}$ and $prio_{RX}$, respectively;

b) the RSRP measurement performed, for the received SCI format 1-A, is higher than $Th(prio_{RX}, prio_{TX})$;

(continued)

c) the SCI format received in slot $t'^{SL}_m$ or the same SCI format which, if and only if the '*Resource reservation period*' field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q$=1, 2, ..., 2 and $j$ =0, 1, ..., $C_{resel}$ - 1. Here, $P'_{rsvp\_RX}$ is $P_{rsvp\_RX}$ converted to units of logical slots,

$Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set ( $t'^{SL}_0, t'^{SL}_1, \ldots, t'^{SL}_{T'max-1}$ ), otherwise slot $t'^{SL}_{n'}$ is the first slot after slot $n$ belonging to the set ( $t'^{SL}_0, t'^{SL}_1, \ldots, t'^{SL}_{T'max-1}$ ); otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th$ $(p_i,p_j)$ is increased by 3 dB for each priority value $Th(p_i,p_j)$ and the procedure continues with step 4.

The UE shall report set $S_A$ to higher layers.

If a resource $r_i$ from the set ($r_0$, $r_1$, $r_2$, ...) is not a member of $S_A$, then the UE shall report re-evaluation of the resource $r_i$ to higher layers.

If a resource $\tilde{r}'_i$ from the set ( $r'_0, r'_1, r'_2, \cdots$ ) meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

    - *sl-PreemptionEnable* is provided and is equal to 'enabled' and $prio_{TX} > prio_{RX}$

    - *sl-PreemptionEnable* is provided and is not equal to 'enabled', and $prio_{RX} < prio_{pre}$ and $prio_{TX} > prio_{RX}$

Hereinafter, sidelink (SL) congestion control will be described.

For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

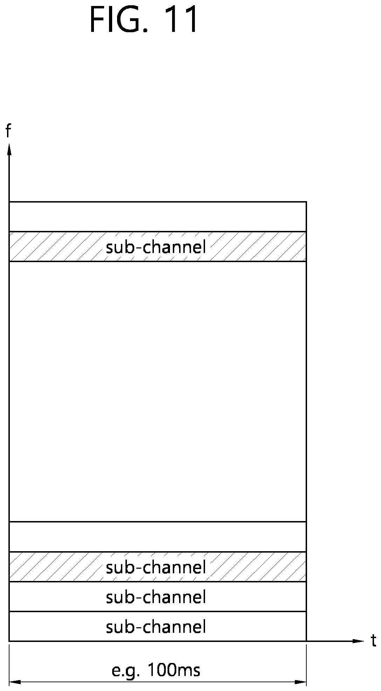

FIG. 11 shows a resource unit for CBR measurement based on an embodiment of the present disclosure. The embodiment of FIG. 11 may be combined with various embodiments of the present disclosure.

Referring to FIG. 11, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 11, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

For example, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g., packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 8 shows an example of SL CBR and SL RSSI.

[Table 8]

| SL CBR | |
|---|---|
| Definition | SL Channel Busy Ratio (SL CBR) measured in slot $n$ is defined as the portion of sub-channels in the resource pool whose SL RSSI measured by the UE exceed a (pre-)configured threshold sensed over a CBR measurement window [$n$-$a$, $n$-1], wherein a is equal to 100 or $100 \cdot 2^\mu$ slots, according to higher layer parameter *timeWindowSize-CBR.* |
| Applicable for | RRC_IDLE intra-frequency, <br><br> RRC_IDLE inter-frequency, <br> RRC CONNECTED intra-frequency, <br> RRC_CONNECTED inter-frequency |
| **SL RSSI** | |
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. <br> For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, <br><br> RRC_IDLE inter-frequency, <br> RRC_CONNECTED intra-frequency, <br> RRC_CONNECTED inter-frequency |

For example, an SL DRX configuration may include one or more pieces/elements of information listed below.

For example, an *SL drx-onDurationTimer* may be information related to the duration at the beginning of a DRX Cycle. For example, the duration at the beginning of a DRX Cycle may be information related to the duration in which the UE operates in the active mode to transmit or receive sidelink data.

For example, an *SL drx-SlotOffset* may be information related to the delay before starting the *drx-onDurationTimerof* the DRX-on duration timer.

For example, an *SL drx-InactivityTimer* may be information indicating the duration after the PSCCH occasion in which a PSCCH indicates a new sidelink transmission and reception for the MAC entity. For example, when the transmitting UE indicates a PSSCH transmission through a PSCCH, the transmitting UE may operate in an active mode while the *SL drx-InactivityTimer* is operating/running, so that the transmitting UE can transmit the PSSCH to a receiving UE. Also, for example, when the receiving UE receives, through PSCCH reception, an indication that the transmitting UE transmits the PSSCH, the receiving UE may operate in an active mode while the *SL drx-InactivityTimer* is operating/running, so that the receiving UE is the transmitting can receive PSSCH from a transmitting UE.

For example, an *SL drx-RetransmissionTimer* may be information related to the maximum duration until a retransmission is received. For example, the *SL drx-Retransmission Timer* may be configured for each HARQ process.

For example, an *SL drx-LongCycleStartOffset* information related to the Long DRX cycle and *drx-StartOffset* which defines the subframe where the Long and Short DRX Cycle starts.

For example, an *SL drx-ShortCycle* may be information related to the Short DRX cycle. For example, the *SL drx-ShortCycle* may be optional information.

For example, an *SL drx-ShortCycleTimer* may be information related to the duration the UE shall follow the Short DRX cycle. For example, the *SL drx-ShortCycleTimer* may be optional information.

For example, an *SL drx-HARQ-RTT-Timer* may be information related to the minimum duration before an assignment for a HARQ retransmission is expected by the MAC entity. For example, the *SL drx-HARQ-RTT-Timer* may be configured for each HARQ process.

Meanwhile, the UE (e.g., P-UE) performing at least one of the power saving operation or the SL DRX operation may perform a congestion control operation, based on various embodiments of the present disclosure. Herein, for example, the congestion control operation may include at least one of the CBR measurement or the CR evaluation.

For example, various embodiments of the present disclosure may be applicable when at least one of a periodic resource reservation operation or an aperiodic resource reservation operation is allowed/configured in a resource pool. For example, various embodiments of the present disclosure may be applicable when at least one of a periodic resource reservation operation or an aperiodic resource reservation operation is not allowed/configured in a resource pool. For example, various embodiments of the present disclosure may be applicable when at least one of a partial sensing operation, a random resource selection operation, or a full sensing operation is allowed/configured in a resource pool. For example, various embodiments of the present disclosure may be applicable when at least one of a partial sensing operation, a random resource selection operation, or a full sensing operation is not allowed/configured in a resource pool. For example, various embodiments of the present disclosure may be applicable when an LCH or service-related packet with a priority greater than or equal to a pre-configured threshold is transmitted. For example, various embodiments of the present disclosure may be applicable when an LCH or service-related packet with a priority less than or equal to a pre-configured threshold is transmitted. For example, various embodiments of the present disclosure may be applicable when a packet is transmitted that is related to a QoS requirement (e.g., latency, reliability, minimum communication range) greater than or equal to a pre-configured threshold. For example, various embodiments of the present disclosure may be applicable when a packet is transmitted that is related to a QoS requirement (e.g., latency, reliability, minimum communication range) less than or equal to a pre-configured threshold. For example, various embodiments of the present disclosure may be applicable when a congestion level (e.g., CBR) within a resource pool is higher than a pre-configured threshold. For example, various embodiments of the present disclosure may be applicable when a congestion level (e.g., CBR) within a resource pool is lower than a pre-configured threshold.

In addition, for example, a sensing operation only based on an RSRP measurement for a PSCCH DMRS may be configured for the P-UE within a resource pool in order to reduce power consumption. For example, reference signals used for the sensing operation between the vehicle UE (V-UE) and the P-UE may be configured differently or independently. For example, even if a sensing operation based on an RSRP measurement for a PSSCH DMRS is configured for the P-UE within a resource pool, the P-UE may exceptionally perform a sensing operation based on the RSRP measurement for the PSCCH DMRS.

In addition, for example, if at least one of a partial sensing operation or a random resource selection operation is allowed within a resource pool, the P-UE may perform the partial sensing operation even if the P-UE selects resources randomly. For example, if at least one of a partial sensing operation or a random resource selection operation is allowed within a resource pool, the P-UE may perform an additional sensing operation to perform re-evaluation or pre-emption check for randomly selected transmission resources even if the P-UE selects the resources randomly.

Based on an embodiment of the present disclosure, a slot/subchannel that satisfies a specific condition may be configured as a slot/subchannel on which an SL RSSI measurement for deriving/calculating a CBR value is performed. For example, the SL RSSI measurement may be performed on all symbols in an SL slot except the first symbol and the last symbol. That is, for example, the SL RSSI measurement may be performed on all symbols in the SL slot except the first symbol for auto gain control (AGC) purposes and the last symbol for transmit/receive switching purposes.

For example, the CBR measurement (e.g., SL RSSI measurement) operation may be performed by at least one of a UE performing a partial sensing operation, a UE performing an additional sensing operation to perform re-evaluation or pre-emption check, a UE that randomly selects a resource but performs a sensing operation, a UE that randomly selects a resource but performs a sensing operation and receives a pre-configured SL channel/signal, a UE receiving/decoding an SL channel/signal, a UE receiving/decoding a pre-configured SL channel/signal, a UE performing a sensing operation, a UE capable of performing a sensing operation, or a UE capable of performing a partial sensing operation.

For example, the CR evaluation operation may be performed by at least one of a UE performing a partial sensing operation, a UE performing an additional sensing operation to perform re-evaluation or pre-emption check, a UE that randomly selects a resource but performs a sensing operation, a UE that randomly selects a resource but performs a sensing operation and receives a pre-configured SL channel/signal, a UE receiving/decoding an SL channel/signal, a UE receiving/decoding a pre-configured SL channel/signal, a UE performing a sensing operation, a UE capable of performing a sensing operation, or a UE capable of performing a partial sensing operation.

For example, the congestion control operation may be performed by at least one of a UE performing a partial sensing operation, a UE performing an additional sensing operation to perform re-evaluation or pre-emption check, a UE that randomly selects a resource but performs a sensing operation, a UE that randomly selects a resource but performs a sensing operation and receives a pre-configured SL channel/signal, a UE receiving/decoding an SL channel/signal, a UE receiving/decoding a pre-configured SL channel/signal, a UE performing a sensing operation, a UE capable of performing a sensing operation, or a UE capable of performing a partial sensing operation.

For example, the slot/subchannel on which the SL RSSI measurement for deriving/calculating the CBR value is performed may include a slot/subchannel on which a PSSCH reception/decoding operation is performed. For example, the slot/subchannel on which the SL RSSI measurement for deriving/calculating the CBR value is performed may include a slot/subchannel on which a PSSCH reception/decoding operation is actually performed. For example, the PSSCH may include a PSSCH for SL data related to a service of interest. For example, the PSSCH may include at least one of 2nd SCI or SL data. For example, the slot/subchannel on which the SL RSSI measurement for deriving/calculating the CBR value is performed may include a slot/subchannel on which a PSCCH (e.g., 1st SCI) reception/decoding operation related to the PSSCH is performed. For example, the slot/subchannel on which the SL RSSI measurement for deriving/calculating the CBR value is performed may include a slot/subchannel on which a PSCCH (e.g., 1st SCI) reception/decoding operation related to the PSSCH is actually performed.

For example, the slot/subchannel on which the SL RSSI measurement for deriving/calculating the CBR value is performed may include a slot/subchannel on which a PSCCH (e.g., 1st SCI) decoding/reception operation for a sensing operation is performed. For example, the slot/subchannel on which the SL RSSI measurement for deriving/calculating the CBR value is performed may include a slot/subchannel on which a PSCCH (e.g., 1st SCI) decoding/reception operation for a sensing operation is actually performed. For example, the slot/subchannel on which the SL RSSI measurement for deriving/calculating the CBR value is performed may include a slot/subchannel on which an RSRP measurement operation for a PSCCH DMRS or an RSRP measurement operation for a PSSCH DMRS is performed. For example, the slot/subchannel on which the SL RSSI measurement for deriving/calculating the CBR value is performed may include a slot/subchannel on which an RSRP measurement operation for a PSCCH DMRS or an RSRP measurement operation for a PSSCH DMRS is actually performed. For example, the slot/subchannel on which the SL RSSI measurement for deriving/calculating the CBR value is performed may include a slot/subchannel on which a 2nd SCI decoding/reception operation on a PSSCH is performed. For example, the slot/subchannel on which the SL RSSI measurement for deriving/calculating the CBR value is performed may include a slot/subchannel on which a 2nd SCI decoding/reception operation on a PSSCH is actually performed.

For example, on a slot/subchannel on which at least one of a PSCCH (e.g., 1st SCI) decoding operation, a 2nd SCI decoding operation, an RSRP measurement operation for a PSCCH DMRS, or an RSRP measurement operation for a PSSCH DMRS is performed, the SL RSSI measurement operation may be performed based on at least one of a symbol in which a PSCCH is present, a time/frequency resource domain in which a PSCCH is located, a PSSCH DMRS symbol, a PSCCH DMRS symbol, symbols within a time from a PSCCH start symbol to the end of PSCCH decoding, symbols within a time from a PSCCH start symbol to the end of 2nd SCI decoding, symbols within a time from a PSCCH start symbol to the completion of the RSRP measurement for the PSSCH DMRS related to the PSCCH, symbols within a time from a PSCCH start symbol to the second-to-last symbol of an SL slot, or a time/frequency resource domain in which a PSFCH resource is located. Herein, for example, the PSSCH DMRS symbol or the PSCCH DMRS symbol may be a symbol on which the RSRP measurement related to the sensing is performed. Herein, for example, the second-to-last symbol of the SL slot may be the second-to-last symbol of the SL slot, excluding the last symbol for transmission/reception purposes. Herein, for example, the PSCCH decoding operation may include an operation excluding a decoding/reception operation of SL data or 2nd SCI on a PSSCH for obtaining sensing results. For example, the slot/subchannel on which the above-described operation is performed may include a slot/subchannel on which the above-described operation is performed exceptionally or additionally. For example, the slot/subchannel on which the above-described operation is performed may be included in an inactive time duration related to SL DRX.

Alternatively, for example, on a slot/subchannel on which at least one of a PSCCH (e.g., 1st SCI) decoding operation, a 2nd SCI decoding operation, an RSRP measurement operation for a PSCCH DMRS, or an RSRP measurement operation for a PSSCH DMRS is performed, an RSRP measurement value for a PSCCH DMRS may be considered/substituted as/with a value obtained by multiplying an SL RSSI measurement value by at least one of a pre-configured weight value or an offset value.

For example, a sum value of at least one of an RSRP measurement value for a PSSCH DMRS, an RSRP measurement value for a PSSCH DMRS related to the PSCCH, an RSRP measurement value for a PSFCH sequence related to the PSCCH/PSSCH, or an RSSI measurement value on a PSFCH resource related to the PSCCH/PSSCH may be considered/substituted as/with a result value obtained by multiplying the sum value of at least one of the SL RSSI measurement value, the RSRP measurement value for the PSSCH DMRS, the RSRP measurement value for the PSSCH DMRS related to the PSCCH, the RSRP measurement value for the PSFCH sequence related to the PSCCH/PSSCH, or the RSSI measurement value on the PSFCH resource related to the PSCCH/PSSCH by at least one of a pre-configured weight value or an offset value.

For example, an average value of at least one of an RSRP measurement value for a PSSCH DMRS, an RSRP measurement value for a PSSCH DMRS related to the PSCCH, an RSRP measurement value for a PSFCH sequence related to the PSCCH/PSSCH, or an RSSI measurement value on a PSFCH resource related to the PSCCH/PSSCH may be considered/substituted as/with a result value obtained by multiplying the average value of at least one of the SL RSSI measurement value, the RSRP measurement value for the PSSCH DMRS, the RSRP measurement value for the PSSCH DMRS related to the PSCCH, the RSRP measurement value for the PSFCH sequence related to the PSCCH/PSSCH, or the RSSI measurement value on the PSFCH resource related to the PSCCH/PSSCH by at least one of a pre-configured weight value or an offset value. Herein, for example, the average value may include a weighted average value.

For example, a maximum value of at least one of an RSRP measurement value for a PSSCH DMRS, an RSRP measurement value for a PSSCH DMRS related to the PSCCH, an RSRP measurement value for a PSFCH sequence related to the PSCCH/PSSCH, or an RSSI measurement value on a PSFCH resource related to the PSCCH/PSSCH may be considered/substituted as/with a result value obtained by multiplying the maximum value of at least one of the SL RSSI measurement value, the RSRP measurement value for the PSSCH DMRS, the RSRP measurement value for the PSSCH DMRS related to the PSCCH, the RSRP measurement value for the PSFCH sequence related to the PSCCH/PSSCH, or the RSSI measurement value on the PSFCH resource related to the PSCCH/PSSCH by at least one of a pre-configured weight value or an offset value.

For example, a minimum value of at least one of an RSRP measurement value for a PSSCH DMRS, an RSRP measurement value for a PSSCH DMRS related to the PSCCH, an RSRP measurement value for a PSFCH sequence related to the PSCCH/PSSCH, or an RSSI measurement value on a PSFCH resource related to the PSCCH/PSSCH may be considered/substituted as/with a result value obtained by multiplying the minimum value of at least one of the SL RSSI measurement value, the RSRP measurement value for the PSSCH DMRS, the RSRP measurement value for the PSSCH DMRS related to the PSCCH, the RSRP measurement value for the PSFCH sequence related to the PSCCH/PSSCH, or the RSSI measurement value on the PSFCH resource related to the PSCCH/PSSCH by at least one of a pre-configured weight value or an offset value.

For example, if a sensing operation based on at least one of the RSRP measurement value for the PSCCH DMRS or the RSRP measurement value for the PSSCH DMRS is configured within a resource pool, the above examples may be applied.

For example, the P-UE may apply the above examples exceptionally even if a sensing operation based on the RSRP measurement value for the PSSCH DMRS is configured within a resource pool.

For example, the slot/subchannel on which the SL RSSI measurement for deriving/calculating the CBR value is performed may include a slot/subchannel on which partial sensing is performed. For example, the slot/subchannel on which the SL RSSI measurement for deriving/calculating the CBR value is performed may include a slot/subchannel on which partial sensing is actually performed.

For example, the slot/subchannel on which the SL RSSI measurement for deriving/calculating the CBR value is performed may include a slot/subchannel on which partial sensing is performed within a sensing window with a pre-configured length/width (LT_SENWIN) before (re)selection of a transmission resource is triggered. For example, the slot/subchannel on which the SL RSSI measurement for deriving/calculating the CBR value is performed may include a slot/subchannel on which partial sensing is actually performed within a sensing window with a pre-configured length/width (LT_SENWIN) before (re)selection of a transmission resource is triggered.

For example, the slot/subchannel on which the SL RSSI measurement for deriving/calculating the CBR value is performed may include a slot/subchannel on which partial sensing is performed within a sensing window with a pre-configured length/size (LT_SENWIN) before data to be transmitted is available in a buffer or on an LCH. For example, the slot/subchannel on which the SL RSSI measurement for deriving/calculating the CBR value is performed may include a slot/subchannel on which partial sensing is actually performed within a sensing window with a pre-configured length/size (LT_SENWIN) before data to be transmitted is available in a buffer or on an LCH.

For example, the slot/subchannel on which the SL RSSI measurement for deriving/calculating the CBR value is performed may include a slot/subchannel on which sensing required to perform a re-evaluation operation or sensing required to perform a pre-emption check operation (ST_SENOPT) is performed. For example, the slot/subchannel on which the SL RSSI measurement for deriving/calculating the CBR value is performed may include a slot/subchannel on which sensing required to perform a re-evaluation operation or sensing required to perform a pre-emption check operation (ST_SENOPT) is actually performed.

For example, the length/size of a sensing window on which ST_SENOPT is performed may be configured to be the same as the length/size of a CBR measurement window or a CR evaluation window. For example, the CBR measurement window or the CR evaluation window may be a CBR measurement window or CR evaluation window of the P-UE.

For example, the length/size of a sensing window on which ST_SENOPT is performed may be configured to be larger than the length/size of a CBR measurement window or a CR evaluation window. For example, the CBR measurement window or the CR evaluation window may be a CBR measurement window or CR evaluation window of the P-UE.

For example, the length/size of a sensing window on which ST_SENOPT is performed may be configured to be larger than or equal to the length/size of a CBR measurement window or a CR evaluation window. For example, the CBR measurement window or the CR evaluation window may be a CBR measurement window or CR evaluation window of the P-UE.

For example, at least one of a physical parameter (hereinafter, PHY PARAMETER) related to congestion control, the length/size of a CR evaluation window, or the length/size of a CBR measurement window related to the P-UE may be configured independently or differently, compared to a different UE type (e.g., V-UE, road side unit (RSU)), a UE not performing an SL DRX operation, a UE not performing a power saving operation, a UE performing a full sensing operation, or a UE performing random resource selection. Herein, for example, the PHY PARAMETER may include at least one of a maximum transmit power, an MCS range, a maximum number of retransmissions, a number of subchannels available for transmission, a maximum number of subchannels available for transmission, a number of RBs available for transmission, a maximum number of RBs available for transmission, or a CR limit value. For example, the physical parameter related to congestion control may include at least one of a physical parameter based on a CBR measurement value or a physical parameter based on a priority related to a transmission packet.

For example, at least one of a PHY PARAMETER related to congestion control, the length/size of a CR evaluation window, or the length/size of a CBR measurement window related to a UE performing a partial sensing operation may be configured independently or differently, compared to a different UE type, a UE not performing an SL DRX operation, a UE not performing a power saving operation, a UE performing a full sensing operation, or a UE performing random resource selection. For example, the physical parameter related to congestion control may include at least one of a physical parameter based on a CBR measurement value or a physical parameter based on a priority related to a transmission packet.

For example, at least one of a PHY PARAMETER related to congestion control, the length/size of a CR evaluation window, or the length/size of a CBR measurement window related to a UE performing random resource selection may be configured independently or differently, compared to a different UE type, a UE not performing an SL DRX operation, a UE not performing a power saving operation, or a UE performing a full sensing operation. For example, the physical parameter related to congestion control may include at least one of a physical parameter based on a CBR measurement value or a physical parameter based on a priority related to a transmission packet.

For example, the slot/subchannel on which the SL RSSI measurement for deriving/calculating the CBR value is performed may include at least one of a slot/subchannel in which the UE wakes-up to receive SL CSI reporting, a slot/subchannel in which the UE wakes-up within an on-duration or an active time duration, a slot/subchannel in which the UE wakes-up based on an SL DRX timer, or a slot/subchannel on which at least one of PSCCH (e.g., 1st SCI) decoding/reception, an RSRP measurement for a PSSCH DMRS, a PSSCH decoding/reception related to a PSCCH, or an SL data or 2nd SCI reception/decoding operation is performed to obtain sensing results within an inactive time duration. Herein, for example, the wake-up may refer to the UE transitioning from an inactive mode to an active mode. For example, the inactive mode may be a mode in which the UE operates in an inactive time related to SL DRX. For example, the active mode may be a mode in which the UE operates in an active time related to SL DRX. For example, the slot/subchannel on which the SL RSSI measurement for deriving/calculating the CBR value is performed may include at least one of a slot/subchannel in which the UE actually wakes-up to receive SL CSI reporting, a slot/subchannel in which the UE actually wakes-up within an on-duration or an active time duration, a slot/subchannel in which the UE wakes-up based on an SL DRX timer, or a slot/subchannel on which at least one of PSCCH (e.g., 1st SCI) decoding/reception, an RSRP measurement for a PSSCH DMRS, a PSSCH decoding/reception related to a PSCCH, or an SL data or 2nd SCI reception/decoding operation is actually performed to obtain sensing results within an inactive time duration.

For example, a CBR measurement operation within an on-duration and a CBR measurement operation within an SL DRX timer-based extended wake-up duration may be performed independently, considering different interference levels. For example, the SL DRX timer-based extended wake-up duration may include a further extended wake-up duration based on the SL DRX timer. For example, the interference level may be an average interference level.

For example, a CBR measurement operation within an on-duration and a CBR measurement operation within a duration, excluding the on-duration, on which at least one of PSCCH decoding/reception, PSSCH decoding/reception, or SL data decoding/reception is performed may be performed independently, considering different interference levels. For example, the interference level may be an average interference level.

For example, a CBR measurement operation within an active time duration related to SL DRX and a CBR measurement operation on a time/frequency domain on which at least one of PSCCH (e.g., 1st SCI) decoding/reception, an RSRP measurement for a PSCCH DMRS, an RSRP measurement for a PSSCH DMRS, PSSCH decoding/reception, or SL data decoding/reception is performed within an inactive time duration related to SL DRX to obtain sensing results may be performed independently, considering different interference levels. For example, the interference level may be an average interference level.

For example, CBR measurement operations may be performed independently based on at least one of a service type, a priority, a QoS requirement (e.g., latency, reliability, minimum communication range), a PQI parameter, an L1 source ID, an L2 source ID, an L1 destination ID, an L2 destination ID, a pair of an L1 source ID and an L1 destination ID, a pair of an L2 source ID and an L2 destination ID, a cast type (e.g., unicast, groupcast, broadcast), an active time related to UE-specific SL DRX related to a cast type, an on-duration related to UE-specific SL DRX related to a cast type, a wake-up duration related to UE-specific SL DRX related to a cast type, an active time related to group/pair-common SL DRX related to a cast type, an on-duration related to group/pair-common SL DRX related to a cast type, or a wake-up duration related to group/pair-common SL DRX related to a cast type.

For example, a PHY PARAMETER configuration based on at least one of congestion control, a CBR measurement value, or a priority related to a transmission packet may be performed/operated independently for at least one of a service type, a priority, a QoS requirement, a PQI parameter, an L1 source ID, an L2 source ID, an L1 destination ID, and an L2 destination ID, a pair of an L1 source ID and an L1 destination ID, a pair of an L2 source ID and an L2 destination ID, a related time/frequency domain related to at least one of cast types, or a time/frequency domain in which a CBR measurement operation is separately performed.

For example, a PHY PARAMETER configuration based on at least one of congestion control, a CBR measurement value, or a priority related to a transmission packet may be performed/operated for the entire time/frequency domain, based on an average value of separately measured CBR measurement values. Herein, the average value may be a weighted average value. For example, a PHY PARAMETER configuration based on at least one of congestion control, a CBR measurement value, or a priority related to a transmission packet may be performed/operated for a time/frequency domain related to at least one of a service type, a priority, a QoS requirement, a PQI parameter, an L1 source ID, an L2 source ID, an L1 destination ID, an L2 destination ID, a pair of an L1 source ID and an L1 destination ID, a pair of an L2 source ID and an L2 destination ID, or a cast type, based on an average value of separately measured CBR measurement values.

For example, a PHY PARAMETER configuration based on at least one of congestion control, a CBR measurement value, or a priority related to a transmission packet may be performed/operated for the entire time/frequency domain, based on a sum value of separately measured CBR measurement values. For example, a PHY PARAMETER configuration based on at least one of congestion control, a CBR measurement value, or a priority related to a transmission packet may be performed/operated for a time/frequency domain related to at least one of a service type, a priority, a QoS requirement, a PQI parameter, an L1 source ID, an L2 source ID, an L1 destination ID, an L2 destination ID, a pair of an L1 source ID and an L1 destination ID, a pair of an L2 source ID and an L2 destination ID, or a cast type, based on a sum value of separately measured CBR measurement values.

For example, a PHY PARAMETER configuration based on at least one of congestion control, a CBR measurement value, or a priority related to a transmission packet may be performed/operated for the entire time/frequency domain, based on a minimum value of separately measured CBR measurement values. For example, a PHY PARAMETER configuration based on at least one of congestion control, a CBR measurement value, or a priority related to a transmission packet may be performed/operated for a time/frequency domain related to at least one of a service type, a priority, a QoS requirement, a PQI parameter, an L1 source ID, an L2 source ID, an L1 destination ID, an L2 destination ID, a pair of an L1 source ID and an L1 destination ID, a pair of an L2 source ID and an L2 destination ID, or a cast type, based on a minimum value of separately measured CBR measurement values.

For example, a PHY PARAMETER configuration based on at least one of congestion control, a CBR measurement value, or a priority related to a transmission packet may be performed/operated for the entire time/frequency domain, based on a maximum value of separately measured CBR measurement values. For example, a PHY PARAMETER configuration based on at least one of congestion control, a CBR measurement value, or a priority related to a transmission packet may be performed/operated for a time/frequency domain related to at least one of a service type, a priority, a QoS requirement, a PQI parameter, an L1 source ID, an L2 source ID, an L1 destination ID, an L2 destination ID, a pair of an L1 source ID and an L1 destination ID, a pair of an L2 source ID and an L2 destination ID, or a cast type, based on a maximum value of separately measured CBR measurement values.

For example, for the P-UE performing the SL DRX operation, a duration in which PSCCH (e.g., 1st SCI) monitoring is performed and a duration in which SL data reception/decoding is performed may be configured independently or separately. For example, for the P-UE performing the SL DRX operation, a wake-up duration in which 2nd SCI monitoring is performed and a wake-up duration in which PSCCH (e.g., 1st SCI) reception/decoding is performed may be configured independently or separately.

Based on an embodiment of the present disclosure, a PHY parameter related to congestion control may be configured independently or differently for each number of slots/subchannels on which the SL RSSI measurement is performed within a CBR measurement window (hereinafter, CBR_WIN) with a pre-configured size/length. For example, a PHY parameter related to congestion control may be configured independently or differently for each number of slots/subchannels on which the SL RSSI measurement is actually performed within CBR_WIN. For example, the PHY parameter related to congestion control may be configured independently or differently for each slot/subchannel having an SL RSSI measurement value that exceeds a pre-configured threshold within CBR_WIN. For example, the PHY PARAMETER related to congestion control may include a parameter based on a CBR measurement value or a priority related to a transmission packet. Herein, for example, the PHY PARAMETER may include at least one of a maximum transmit power, an MCS range, a maximum number of retransmissions, a number of subchannels available for transmission, a maximum number of subchannels available for transmission, a number of RBs available for transmission, a maximum number of RBs available for transmission, or a CR limit value.

Based on an embodiment of the present disclosure, the P-UE may determine, based on UE implementation, whether to perform sensing within a duration from a time when data arrives on an LCH to a time when (re)selection of a transmission resource is triggered, and the P-UE may perform a pre-configured sensing operation (e.g., ST_SENOPT, partial sensing) from the time when the resource (re)selection is triggered. For example, the P-UE may determine, based on UE implementation, whether to perform sensing within a duration from a time when data to be transmitted arrives on an LCH or an L2 buffer to a time when (re)selection of a transmission resource is triggered, and the P-UE may mandatorily perform a pre-configured sensing operation (e.g., ST_SENOPT, partial sensing) from the time when the resource (re)selection is triggered.

For example, the P-UE may determine, based on UE implementation, whether to perform sensing within a duration from a time when data to be transmitted arrives on an LCH or an L2 buffer to a time before a pre-configured offset value from a time when (re)selection of a transmission resource is triggered, and the P-UE may perform a pre-configured sensing operation (e.g., ST_SENOPT, partial sensing) from the time before the pre-configured offset value from the time when the resource (re)selection is triggered.

For example, the P-UE may determine, based on UE implementation, whether to perform sensing within a duration from a time when data to be transmitted arrives on an LCH or an L2 buffer to a time after a pre-configured offset value from a time when (re)selection of a transmission resource is triggered, and the P-UE may perform a pre-configured sensing operation (e.g., ST_SENOPT, partial sensing) from the time after the pre-configured offset value from the time when the resource (re)selection is triggered.

Based on an embodiment of the present disclosure, for slots/subchannels on which the SL RSSI measurement is not performed (NO_MRRC) within CBR_WIN, the P-UE may assume/derive a CBR value related to NO_MRRC based on at least one of the following rules. For example, the slots/subchannels on which the SL RSSI measurement is not performed (NO_MRRC) may include slots/subchannels on which the SL RSSI measurement is not performed related to CBR_WIN on which the SL RSSI measurement is not performed for slots/subchannels greater than or equal to a pre-configured threshold number. For example, the slots/subchannels on which the SL RSSI measurement is not performed may be slots/subchannels on which the SL RSSI measurement is not actually performed.

Alternatively, for example, in the case of CBR_WIN on which the SL RSSI measurement is not performed for slots/subchannels greater than or equal to a pre-configured threshold number, the P-UE may assume/replace a CBR measurement value as/with a CBR measurement value or SL RSSI measurement value related to the previous closest CBR_WIN in a time domain. For example, the closest CBR_WIN in the time domain before CBR_WIN on which the SL RSSI measurement is not performed for slots/subchannels greater than or equal to the pre-configured threshold number may be CBR_WIN on which the SL RSSI measurement is performed for slots/subchannels greater than or equal to a pre-configured threshold number. For example, for CBR_WIN on which the SL RSSI measurements is not performed for slots/subchannels greater than or equal to a pre-configured threshold number, the P-UE may assume/substitute a CBR measurement value as/with an average value of SL RSSI measurement values or CBR measurement values related to the previous closest pre-configured number of CBR_WINs in a time domain. For example, the configured number may be 1. For example, the average value may be a weighted average value.

For example, for CBR_WIN on which the SL RSSI measurements is not performed for slots/subchannels greater than or equal to a pre-configured threshold number, the P-UE may assume/substitute a CBR measurement value as/with a maximum value of SL RSSI measurement values or CBR measurement values related to the previous closest pre-configured number of CBR_WINs in a time domain. For example, the configured number may be 1.

For example, for CBR_WIN on which the SL RSSI measurements is not performed for slots/subchannels greater than or equal to a pre-configured threshold number, the P-UE may assume/substitute a CBR measurement value as/with a minimum value of SL RSSI measurement values or CBR measurement values related to the previous closest pre-configured number of CBR_WINs in a time domain. For example, the configured number may be 1.

For example, the P-UE may determine a CBR value related to NO_MRRC as an SL RSSI measurement value related to NO_MRRC at the same slot location within the closest CBR_WIN prior to CBR_WIN related to NO_MRRC in a time domain. For example, the closest CBR_WIN prior to CBR_WIN related to NO_MRRC may be CBR_WIN on which the SL RSSI measurement is performed for slots/subchannels greater than or equal to a pre-configured threshold number. For example, the slots may be logical slots or physical slots. For example, the slot location may include at least one of a sequence number of the slot or an index of the slot. For example, the SL RSSI measurement value may be an actual SL RSSI measurement value.

For example, the P-UE may determine a CBR value related to NO_MRRC as an average value of SL RSSI measurement values related to NO_MRRC at the same slot location within the closest pre-configured number of CBR_WINs prior to CBR_WIN related to NO_MRRC in a time domain. For example, the average value may include a weighted average value. For example, the closest CBR_WIN prior to CBR_WIN related to NO_MRRC may be CBR_WIN on which the SL RSSI measurement is performed for slots/subchannels greater than or equal to a pre-configured threshold number. For example, the slots may be logical slots or physical slots. For example, the slot location may include at least one of a sequence number of the slot or an index of the slot. For example, the SL RSSI measurement value may be an actual SL RSSI measurement value.

For example, the P-UE may determine a CBR value related to NO_MRRC as a maximum value of SL RSSI measurement values related to NO_MRRC at the same slot location within the closest pre-configured number of CBR_WINs prior to CBR_WIN related to NO_MRRC in a time domain. For example, the closest CBR_WIN prior to CBR_WIN related to NO_MRRC may be CBR_WIN on which the SL RSSI measurement is performed for slots/subchannels greater than or equal to a pre-configured threshold number. For example, the slots may be logical slots or physical slots. For example, the slot location may include at least one of a sequence number of the slot or an index of the slot. For example, the SL RSSI measurement value may be an actual SL RSSI measurement value.

For example, the P-UE may determine a CBR value related to NO_MRRC as a minimum value of SL RSSI measurement values related to NO_MRRC at the same slot location within the closest pre-configured number of CBR_WINs prior to CBR_WIN related to NO_MRRC in a time domain. For example, the closest CBR_WIN prior to CBR_WIN related to NO_MRRC may be CBR_WIN on which the SL RSSI measurement is performed for slots/subchannels greater than or equal to a pre-configured threshold number. For example, the slots may be logical slots or physical slots. For example, the slot location may include at least one of a sequence number of the slot or an index of the slot. For example, the SL RSSI measurement value may be an actual SL RSSI measurement value.

Based on an embodiment of the present disclosure, in contrast to the V-UE, the length/size of a window on which at least one of CBR measurement, CR evaluation, partial sensing, or ST_SENOPT is performed may be configured for the P-UE in units of logical slots. For example, the logical slots may include logical slots belonging to a resource pool or logical slots to which a bitmap related to the resource pool is applied.

For example, in contrast to the V-UE, the length/size of a window on which at least one of CBR measurement, CR evaluation, partial sensing, or ST_SENOPT is performed may be configured for the P-UE in units of slots in which a UL resource excluding at least one of a DL resource, an SL SSB, or a reserved slot exists. For example, the slot in which the UL resource excluding at least one of the DL resource, the SL SSB, or the reserved slot exists may be a physical slot. For example, the slot in which the UL resource excluding at least one of the DL resource, the SL SSB, or the reserved slot exists may include a slot belonging to a resource pool or a slot to which a bitmap related to the resource pool is applied.

For example, in contrast to the V-UE, the length/size of a window on which at least one of CBR measurement, CR evaluation, partial sensing, or ST_SENOPT is performed may be configured for the P-UE in units of slots in which a UL resource exists before at least one of a DL resource, an SL SSB, or a reserved slot is excluded. For example, the slot in which the UL resource exists before at least one of the DL resource, the SL SSB, or the reserved slot is excluded may be a physical slot. For example, the slot in which the UL resource exists before at least one of the DL resource, the SL SSB, or the reserved slot is excluded may include a slot belonging to a resource pool or a slot to which a bitmap related to the resource pool is applied.

Herein, for example, the pre-configured length/size window may comprise only slots/symbols on which an actual SL RSSI measurement operation was performed. For example, the pre-configured length/size window may comprise only slots/symbols in which an actual SL RSSI measurement and/or a sensing operation was performed. For example, the pre-configured length/size window may comprise only slots/symbols which an actual SL RSSI measurement and/or a sensing operations will be performed.

In addition, for example, the P-UE may derive/determine a CBR measurement value by averaging a CBR value measured within a current window (e.g., from SLOT#(N-PRO_OFFSET) to SLOT#(N-PRO_OFFSET-CBR_WIN size/length) and CBR values measured within a pre-configured number of past windows. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number. Herein, for example, the averaging may include weighted averaging. For example, the averaging may include weighted averaging in which a relatively high weight is configured/applied to a CBR measurement value of a window in which the number of slots/subchannels on which the SL RSSI measurement is performed is relatively large or greater than a pre-configured threshold. For example, the averaging may include weighted averaging in which a relatively low weight is configured/applied to a CBR measurement value of a window in which the number of slots/subchannels on which the SL RSSI measurement is performed is relatively large or greater than a pre-configured threshold.

For example, the P-UE may derive/determine a CBR measurement value related to congestion control for PSSCH/PSCCH transmission on SLOT#N by averaging a CBR value measured within the current or most recent window (e.g., from SLOT#(N-PRO_OFFSET) to SLOT#(N-PRO_OFFSET-CBR_WIN size/length) and CBR values measured within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number. Herein, for example, the averaging may include weighted averaging. For example, the averaging may include weighted averaging in which a relatively high weight is configured/applied to a CBR measurement value of a window in which the number of slots/subchannels on which the SL RSSI measurement is performed is relatively large or greater than a pre-configured threshold. For example, the averaging may include weighted averaging in which a relatively low weight is configured/applied to a CBR measurement value of a window in which the number of slots/subchannels on which the SL RSSI measurement is performed is relatively large or greater than a pre-configured threshold.

For example, the P-UE may determine, as a CBR measurement value related to congestion control for PSSCH/PSCCH transmissions on SLOT#N, a minimum value of a CBR value measured within the current or most recent window (e.g., from SLOT#(N-PRO_OFFSET) to SLOT#(N-PRO_OFFSET-CBR_WIN size/length) and CBR values measured within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number.

For example, the P-UE may determine, as a CBR measurement value related to congestion control for PSSCH/PSCCH transmissions on SLOT#N, a maximum value of a CBR value measured within the current or most recent window (e.g., from SLOT#(N-PRO_OFFSET) to SLOT#(N-PRO_OFFSET-CBR_WIN size/length) and CBR values measured within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number.

In addition, for example, the P-UE may derive/determine an SL RSSI value of a specific slot within a CBR measurement window with a pre-configured length/size, by averaging an SL RSSI value actually measured on the specific slot and SL RSSI values measured on slots in the same location within a pre-configured number of past windows. For example, the slot may be a logical slot or a physical slot. For example, the slot location may include at least one of a sequence number of the slot or an index of the slot. For example, the SL RSSI value measured on the slot in the same location within the past window may be an actual measured SL RSSI value.

For example, the P-UE may derive/determine an SL RSSI value for a specific slot/subchannel within CBR measurement window with a pre-configured length/size (e.g., from SLOT#(N-PRO_OFFSET) to SLOT#(N-PRO_OFFSET-CBR_WIN size/length) related to congestion control for PSSCH/PSCCH transmissions on SLOT#N, by averaging an SL RSSI value actually measured on the specific slot/subchannel and SL RSSI values measured on slots/subchannels in the same location within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number. Herein, for example, the averaging may include weighted averaging. For example, the averaging may include weighted averaging in which a relatively high weight is configured/applied to a CBR measurement value of a window in which the number of slots/subchannels on which the SL RSSI measurement is performed is relatively large or greater than a pre-configured threshold. For example, the averaging may include weighted averaging in which a relatively low weight is configured/applied to a CBR measurement value of a window in which the number of slots/subchannels on which the SL RSSI measurement is performed is relatively large or greater than a pre-configured threshold. For example, the slot may be a logical slot or a physical slot. For example, the slot location may include at least one of a sequence number of the slot or an index of the slot. For example, the SL RSSI value measured on the slot in the same location within the past window may be an actual measured SL RSSI value.

For example, the P-UE may derive/determine, as an SL RSSI value for a specific slot/subchannel within CBR measurement window with a pre-configured length/size (e.g., from SLOT#(N-PRO_OFFSET) to SLOT#(N-PRO_OFFSET-CBR_WIN size/length) related to congestion control for PSSCH/PSCCH transmissions on SLOT#N, a maximum value of an SL RSSI value actually measured on the specific slot/subchannel and SL RSSI values measured on slots/subchannels in the same location within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number. For example, the slot may be a logical slot or a physical slot. For example, the slot location may include at least one of a sequence number of the slot or an index of the slot. For example, the SL RSSI value measured on the slot in the same location within the past window may be an actual measured SL RSSI value.

For example, the P-UE may derive/determine, as an SL RSSI value for a specific slot/subchannel within CBR measurement window with a pre-configured length/size (e.g., from SLOT#(N-PRO_OFFSET) to SLOT#(N-PRO_OFFSET-CBR_WIN size/length) related to congestion control for PSSCH/PSCCH transmissions on SLOT#N, a minimum value of an SL RSSI value actually measured on the specific slot/subchannel and SL RSSI values measured on slots/subchannels in the same location within a pre-configured number of past windows closest in a time domain. Herein, for example, PRO_OFFSET may represent a processing time for congestion control. Herein, for example, the pre-configured number of past windows may be windows on which the SL RSSI measurement is performed for slots/subchannels greater than or equal to a pre-configured threshold number. For example, the slot may be a logical slot or a physical slot. For example, the slot location may include at least one of a sequence number of the slot or an index of the slot. For example, the SL RSSI value measured on the slot in the same location within the past window may be an actual measured SL RSSI value.

In addition, for example, the P-UE performing the SL DRX operation may use/apply a CBR value or an SL RSSI value measured in an on-duration when performing congestion control related to transmission. For example, the SL RSSI value may be one of a maximum value of SL RSSI values, a minimum value of SL RSSI values, or an average value of SL RSSI values.

For example, the P-UE performing the SL DRX operation may use/apply a CBR value or an SL RSSI value measured in at least one of an on-duration, an active time duration based on a pre-configured SL DRX timer, or an additional active time duration based on a pre-configured SL DRX timer when performing congestion control related to transmission. For example, the SL RSSI value may be one of a maximum value of SL RSSI values, a minimum value of SL RSSI values, or an average value of SL RSSI values.

For example, the P-UE performing the SL DRX operation may use/apply a CBR value or an SL RSSI value measured in at least one of an on-duration, an active time duration based on a pre-configured SL DRX timer, or an additional active time duration based on a pre-configured SL DRX timer when performing congestion control related to transmission in an active time and/or a wake-up duration. For example, the SL RSSI value may be one of a maximum value of SL RSSI values, a minimum value of SL RSSI values, or an average value of SL RSSI values. For example, the active time and/or the wake-up duration may be a duration other than a duration in which the CBR value or the SL RSSI value is measured.

Based on an embodiment of the present disclosure, if the P-UE fails to perform an SL RSSI measurement operation on slots greater than or equal to a pre-configured threshold number within a CBR measurement window with a pre-configured length/size, the P-UE may perform congestion control based on a default CBR value. For example, if the P-UE fails to perform an SL RSSI measurement on slots/subchannels greater than or equal to a pre-configured threshold number within a CBR measurement window with a pre-configured length/size related to congestion control for PSSCH/PSCCH transmissions on SLOT#N (e.g., from SLOT#(N-PRO_OFFSET) to SLOT#(N-PRO_OFFSET-CBR_WIN size/length), the P-UE may perform congestion control based on a default CBR value. For example, PRO_OFFSET may represent the processing time for congestion control. For example, the default CBR value may be pre-configured. For example, if the P-UE fails to perform an SL RSSI measurement on slots/subchannels greater than or equal to a pre-configured threshold number within a CBR measurement window with a pre-configured length/size related to congestion control for PSSCH/PSCCH transmissions on SLOT#N (e.g., from SLOT#(N-PRO_OFFSET) to SLOT#(N-PRO_OFFSET-CBR_WIN size/length), the P-UE may perform congestion control based on a PHY PARAMETER related to the default CBR value. For example, the PHY PARAMETER may be based on a CBR value or a priority related to a transmission packet. For example, the PHY PARAMETER may include at least one of a maximum transmit power, an MCS range, a maximum number of retransmissions, a number of subchannels available for transmission, a maximum number of subchannels available for transmission, a number of RBs available for transmission, a maximum number of RBs available for transmission, or a CR limit value.

For example, if the P-UE fails to perform an SL RSSI measurement operation on a pre-configured threshold range of slots/subchannels within a CBR measurement window with a pre-configured length/size (e.g., from SLOT#(N-PRO_OFFSET) to SLOT#(N-PRO_OFFSET-CBR_WIN size/length) related to congestion control for PSSCH/PSCCH transmission on SLOT#N, the P-UE may perform congestion control based on a default CBR value. For example, PRO_OFFSET may represent the processing time for congestion control. For example, the default CBR value may be pre-configured. For example, if the P-UE fails to perform an SL RSSI measurement operation on a pre-configured threshold range of slots/subchannels within a CBR measurement window with a pre-configured length/size (e.g., from SLOT#(N-PRO_OFFSET) to SLOT#(N-PRO_OFFSET-CBR_WIN size/length) related to congestion control for PSSCH/PSCCH transmission on SLOT#N, the P-UE may perform congestion control based on a PHY PARAMETER related to the default CBR value. For example, the PHY PARAMETER may be based on a CBR value or a priority related to a transmission packet.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on an average value of the default CBR value and the actual measured/derived CBR value within the CBR measurement window. For example, the average value may be a weighted average value. For example, the default CBR value may be pre-configured.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on a maximum value of the default CBR value and the actual measured/derived CBR value within the CBR measurement window. For example, the default CBR value may be pre-configured.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on a minimum value of the default CBR value and the actual measured/derived CBR value within the CBR measurement window. For example, the default CBR value may be pre-configured.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on a minimum value of a PHY PARAMETER related to the default CBR value and a PHY PARAMETER related to the actual measured/derived CBR value within the CBR measurement window. For example, the default CBR value may be pre-configured. For example, the PHY PARAMETER may be based on a CBR value or a priority related to a transmission packet.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on a maximum value of a PHY PARAMETER related to the default CBR value and a PHY PARAMETER related to the actual measured/derived CBR value within the CBR measurement window. For example, the default CBR value may be pre-configured. For example, the PHY PARAMETER may be based on a CBR value or a priority related to a transmission packet.

For example, within a CBR measurement window with a pre-configured length/size, if the P-UE fails to perform an SL RSSI measurement operation on slots greater than or equal to a pre-configured threshold number, or if the P-UE performs an SL RSSI measurement operation on slots/subchannels within a range of a pre-configured threshold number, the P-UE may perform congestion control based on an average value of a PHY PARAMETER related to the default CBR value and a PHY PARAMETER related to the actual measured/derived CBR value within the CBR measurement window. For example, the default CBR value may be pre-configured. For example, the PHY PARAMETER may be based on a CBR value or a priority related to a transmission packet.

Based on an embodiment of the present disclosure, if a UE receives an SL DRX command MAC CE, the UE may stop an on-duration timer/inactivity timer and perform an operation related to a long DRX cycle. For example, if the UE receives an SL DRX command MAC CE, the UE may stop an ongoing on-duration timer/inactivity timer and perform at least one of an operation related to a long DRX cycle or an operation related to a short DRX cycle. Herein, for example, the operation related to the short DRX cycle may be performed if the short DRX cycle is configured.

Further, for example, if the UE receives a long DRX command MAC CE related to sidelink, the UE may stop a timer related to a short cycle and perform an operation related to a long DRX cycle. Herein, for example, after the transmitting UE transmits the DRX command MAC CE related to sidelink or the long DRX command MAC CE related to sidelink, the transmitting UE may release reserved/selected retransmission resource(s) before the long DRX cycle or the short DRX cycle occurs. Herein, for example, after the transmitting UE transmits the DRX command MAC CE related to sidelink or the long DRX command MAC CE related to sidelink, the transmitting UE may release the remaining reserved/selected retransmission resources based on SL HARQ feedback before the long DRX cycle or the short DRX cycle occurs. Herein, for example, if the above examples are applied, the released reserved/selected retransmission resource(s) may not be counted in the CR evaluation. For example, if the above examples are applied, the reserved/selected retransmission resource(s) released based on SL HARQ feedback may not be counted in the CR evaluation.

For example, whether the various embodiments of the present disclosure are applied may be determined based on at least one of the following elements/parameters comprising: a service type; LCH-related priority; service-related priority; QoS requirements (e.g., latency, reliability, minimum communication range); PQI parameters; an LCH/MAC PDU transmission with HARQ feedback enabled; an LCH/MAC PDU transmission with HARQ feedback disabled; CBR measure of resource pool; an SL cast type (e.g., unicast, groupcast, broadcast); an SL groupcast HARQ feedback option (e.g., NACK ONLY based feedback, ACK/NACK based feedback, TX-RX distance based NACK ONLY feedback); an SL mode 1 CG type (e.g., SL CG type 1, SL CG type 2); an SL mode type (e.g., mode 1, mode 2); a resource pool; whether a PSFCH resource is configured for a resource pool; whether an operation for periodic resource reservation is allowed/configured for a resource pool; whether an operation for aperiodic resource reservation is allowed/configured for a resource pool; whether an operation for partial sensing is allowed/configured for a resource pool; whether an operation for random resource selection is allowed/configured for a resource pool; whether an operation for full sensing is allowed/configured for a resource pool; a source ID; a destination ID; a source L2 ID; a destination L2 ID; PCS RRC connection link; an SL Link; connection state with the base station (e.g., RRC CONNECTED state, IDLE state, INACTIVE state); an SL HARQ process; an SL HARQ process ID; whether the TX UE or the RX UE performs SL DRX operation; whether it corresponds to a power saving UE; whether PSFCH TX and PSFCH RX overlap from a specific UE perspective; whether a plurality of PSFCH TXs that exceed UE capability overlap; whether PSFCH TX and/or PSFCH RX is omitted; whether the RX UE actually successfully received the PSCCH and/or PSSCH (re)transmission from the TX UE.

For example, parameter setting values related to various embodiments of the present disclosure may be determined based on at least one of the following elements/parameters comprising: a service type; LCH-related priority; service-related priority; QoS requirements (e.g., latency, reliability, minimum communication range); PQI parameters; an LCH/MAC PDU transmission with HARQ feedback enabled; an LCH/MAC PDU transmission with HARQ feedback disabled; CBR measure of resource pool; an SL cast type (e.g., unicast, groupcast, broadcast); an SL groupcast HARQ feedback option (e.g., NACK ONLY based feedback, ACK/NACK based feedback, TX-RX distance based NACK ONLY feedback); an SL mode 1 CG type (e.g., SL CG type 1, SL CG type 2); an SL mode type (e.g., mode 1, mode 2); a resource pool; whether a PSFCH resource is configured for a resource pool; whether an operation for periodic resource reservation is allowed/configured for a resource pool; whether an operation for aperiodic resource reservation is allowed/configured for a resource pool; whether an operation for partial sensing is allowed/configured for a resource pool; whether an operation for random resource selection is allowed/configured for a resource pool; whether an operation for full sensing is allowed/configured for a resource pool; a source ID; a destination ID; a source L2 ID; a destination L2 ID; PCS RRC connection link; an SL Link; connection state with the base station (e.g., RRC CONNECTED state, IDLE state, INACTIVE state); an SL HARQ process; an SL HARQ process ID; whether the TX UE or the RX UE performs SL DRX operation; whether it corresponds to a power saving UE; whether PSFCH TX and PSFCH RX overlap from a specific UE perspective; whether a plurality of PSFCH TXs that exceed UE capability overlap; whether PSFCH TX and/or PSFCH RX is omitted; whether the RX UE actually successfully received the PSCCH and/or PSSCH (re)transmission from the TX UE.

In addition, in various embodiments of the present disclosure, for example, "configuration" or "designation" may mean that a base station informs the UE through a pre-defined channel/signal (e.g., SIB, RRC, MAC CE). For example, the "configuration" or "designation" may mean a format provided through PRE-CONFIGURATION. For example, the "configuration" or "designation" may be a format in which the UE informs other UEs through a predefined channel/signal (e.g., SL MAC CE, PCS RRC). Here, for example, the channel/signal may include a channel/signal for a physical layer or a higher layer.

In addition, in various embodiments of the present disclosure, for example, "PSFCH" may be replaced with at least one of an NR PSSCH, an NR PSCCH, an NR SL SSB, an LTE PSSCH, an LTE PSCCH, an LTE SL SSB, and a UL channel/signal.

In addition, various embodiments of the present disclosure may be combined with each other.

In various embodiments of the present disclosure, the aforementioned SL DRX timer may be used for the following purposes.

For example, the SL DRX on-duration timer may be used in a period in which a UE performing an SL DRX operation basically needs to operate as an active time in order to receive a PSCCH/PSSCH of a counterpart/peer UE.

For example, the SL DRX inactivity timer may be used in a period for extending the SL DRX on-duration period, which is a period in which a UE performing an SL DRX operation basically needs to operate as an active time to receive a PSCCH/PSSCH of a counterpart/peer UE. That is, for example, the SL DRX on-duration timer may be extended by the SL DRX inactivity timer period. In addition, when the UE receives a new packet (e.g., a new PSSCH) from the counterpart/peer UE, the UE may start the SL DRX inactivity timer to extend the SL DRX on-duration timer.

For example, the SL DRX HARQ RTT timer may be used in a sleep mode operation period until a UE performing SL DRX operation receives a retransmission packet (or PSSCH assignment) transmitted from a counterpart/peer UE. That is, for example, when the UE starts the SL DRX HARQ RTT timer, the UE may determine that the counterpart/peer UE will not transmit a sidelink retransmission packet to itself until the SL DRX HARQ RTT timer expires, and accordingly, the UE may operate in a sleep mode during the corresponding timer.

For example, the SL DRX retransmission timer may be used in an active time period for a UE performing an SL DRX operation to receive a retransmission packet (or PSSCH assignment) transmitted from a counterpart/peer UE. For example, during the SL DRX retransmission timer period, the UE may monitor a reception of a retransmission sidelink packet (or PSSCH assignment) transmitted by the counterpart/peer UE.

In addition, in the present disclosure, for example, an on-duration or an 'Onduration' may be an Active Time duration (i.e., a duration operating in a wake-up state (an RF module being "on") to receive/transmit a wireless signal). For example, an off-duration or an 'Offduration may be a Sleep Time duration (i.e., a duration operating in a sleep mode (an RF module being "off") for power saving, wherein the transmitting UE may not operate in the sleep mode during the sleep time duration, and wherein if necessary, even in the sleep time, it may be allowed to operate as an active time for a moment for a sensing operation/transmission operation).

In the present disclosure, for example, "specific time" may be a time in which the UE operates as an active time for a predefined time in order to receive a sidelink signal or sidelink data from a counterpart/peer UE. For example, the "specific time" may be a time in which the UE operates as an active time as long as a timer (e.g., an SL DRX retransmission timer, an SL DRX inactivity timer, a timer enabling to operate as an active time in the DRX operation of the RX UE) time to receive a sidelink signal or sidelink data from a counterpart/peer UE.

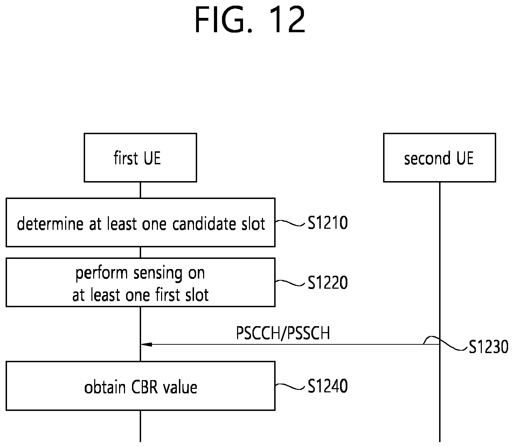

FIG. 12 shows a procedure for a first UE to obtain a CBR value, based on an embodiment of the present disclosure. The embodiment of FIG. 12 may be combined with various embodiments of the present disclosure.

Referring to FIG. 12, in step S1210, the first UE may determine at least one candidate slot for selecting an SL resource.

In step S1220, the first UE may perform sensing on at least one first slot related to the at least one candidate slot.

In step S1230, the first UE may receive, from a second UE, at least one physical sidelink shared channel (PSCCH) and at least one physical sidelink shared channel (PSSCH) based on at least one second slot.

In step S1240, the first UE may obtain a channel busy ratio (CBR) value based on a received signal strength indicator (SL RSSI) measured on the at least one first slot and the at least one second slot.

For example, the CBR value may be obtained based on a first CBR measurement window with a pre-configured length including the at least one first slot and the at least one second slot.

For example, a parameter related to CBR may be configured based on a number of slots on which the SL RSSI is measured within the first CBR measurement window.

For example, based on that the SL RSSI is measured on a number of slots less than a pre-configured threshold within the first CBR measurement window, a default CBR value may be used.

For example, based on that the SL RSSI is measured on a number of slots less than a pre-configured threshold within the first CBR measurement window, an average value of a default CBR value and the CBR values obtained based on the first CBR measurement window may be used.

For example, a CBR value for a slot on which the SL RSSI is not measured within the first CBR measurement window may be obtained based on an SL RSSI measurement value related to a second CBR measurement window.

For example, the second CBR measurement window may be a previous CBR measurement window that is closest in a time domain to the first CBR measurement window. For example, the second CBR measurement window may be a window on which the SL RSSI is measured for a number of slots greater than or equal to a pre-configured threshold. For example, a CBR value for a slot on which the SL RSSI is not measured within the first CBR measurement window may be obtained based on an SL RSSI measurement value for a slot in the same location as a slot on which the SL RSSI is not measured within the second CBR measurement window. For example, the same location may include at least one of the same index or the same sequence number.

For example, a CBR value for a slot on which the SL RSSI is not measured within the first CBR measurement window may be obtained based on SL RSSI measurement values related to a pre-configured number of second CBR measurement windows. For example, the second CBR measurement window may be a previous CBR measurement window that is closest in a time domain to the first CBR measurement window. For example, the CBR value for the slot on which the SL RSSI is not measured within the first CBR measurement window may be obtained based on an average value of the SL RSSI measurement values related to the pre-configured number of second CBR measurement windows.

For example, the length of the first CBR measurement window may be determined based on the type of the first device. For example, the type of the first device may include a vehicle UE and a roadside unit (RSU).

For example, the length of the first CBR measurement window may be determined in units of logical slots.

For example, the at least one second slot may include a slot that is included in an inactive time duration related to discontinuous reception (SL DRX). For example, the at least one second slot may be included in an inactive time duration related to a first SL DRX, and the first UE may receive the at least one PSCCH and the at least one PSSCH on the at least one second slot within an active time duration related to a second SL DRX for sensing. That is, the at least one second slot may be included in an inactive time duration related to the first SL DRX and an active time duration related to the second SL DRX.

For example, the at least one second slot may include a slot that is included in an inactive time duration related to SL DRX at a first time. For example, at a second time, the inactive time related to SL DRX may transition to an active time. For example, the second time may be a time when the at least one PSCCH and the at least one PSSCH are received. For example, the first time may be a time prior to the second time.

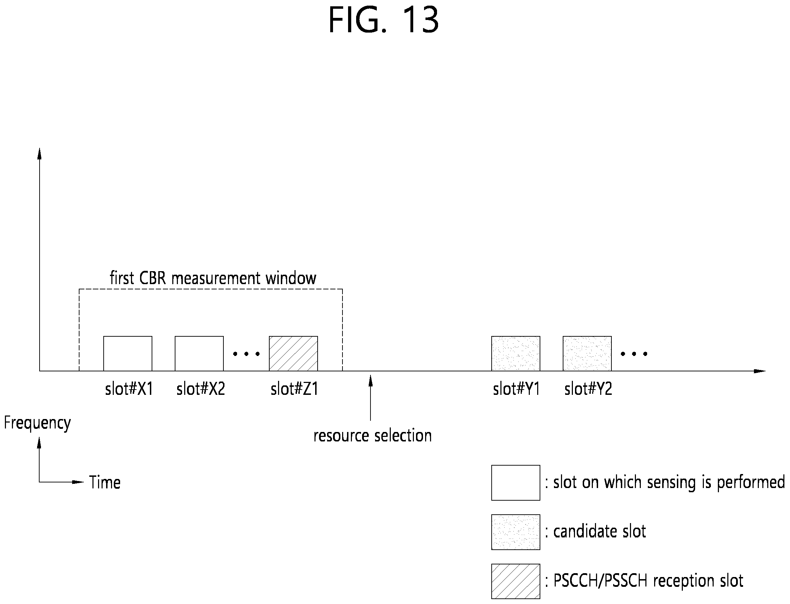

FIG. 13 shows an example of measuring CBR, based on an embodiment of the present disclosure. The embodiment of FIG. 13 may be combined with various embodiments of the present disclosure.

Referring to FIG. 13, the first UE may determine at least one candidate slot for selecting an SL resource. Herein, for example, the slot#Y1 and the slot#Y2 may be the at least one candidate slot.

For example, the first UE may perform sensing on at least one first slot related to the at least one candidate slot. For example, the slot#X1 and the slot#X2 may be the at least one first slot. For example, the slot#X1 and the slot#X2 may be determined based on a number of periods corresponding to a specific configured value from the slot#Y1 or the slot#Y2. For example, the periods may be periods of transmission resources configured in a resource pool. For example, the resource (slot#X1, slot#X2) may be sensed that is temporally earlier than the candidate resource (slot#Y1 or slot#Y2) that is subject to resource conflict determination by an integer multiple k value of each of the periods. For example, the k value may be configured in the form of a bitmap. For example, the at least one first slot may be a slot on which sensing is performed prior to a time (slot n) at which resource (re)selection is triggered.

For example, the first UE may receive at least one PSCCH and at least one PSSCH based on at least one second slot. For example, the slot #Z1 may be the at least one second slot.

For example, the first UE may obtain a CBR value based on the SL RSSI measured on the at least one first slot and the at least one second slot.

For example, the CBR value may be obtained based on a first CBR measurement window with a pre-configured length including the slot#X1, the slot#X2, and the slot#Z1.

For example, a parameter related to CBR may be configured based on a number of slots (e.g., three) on which the SL RSSI is measured within the first CBR measurement window.

For example, based on that the SL RSSI is measured on a number of slots less than a pre-configured threshold (e.g., 4) within the first CBR measurement window, a default CBR value may be used.

For example, based on that the SL RSSI is measured on a number of slots less than a pre-configured threshold (e.g., 4) within the first CBR measurement window, an average value of a default CBR value and the CBR values obtained based on the first CBR measurement window may be used.

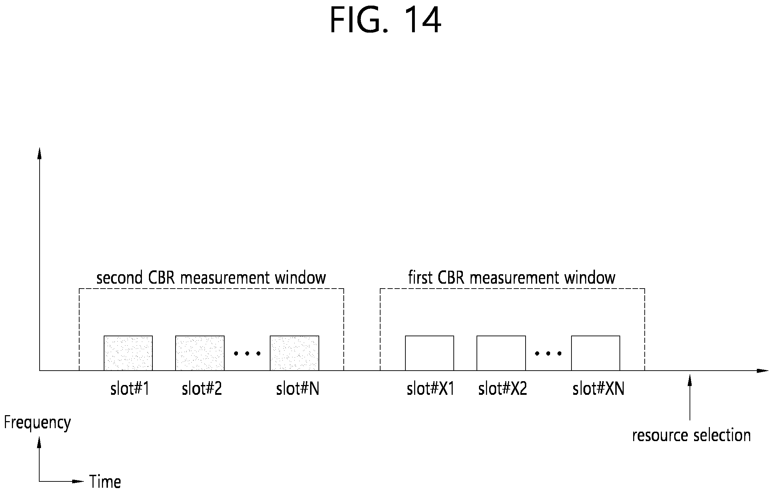

FIG. 14 shows another example of measuring CBR, based on an embodiment of the present disclosure. The embodiment of FIG. 14 may be combined with various embodiments of the present disclosure.

Referring to FIG. 14, the first UE may perform sensing on at least one first slot related to at least one candidate slot for selecting an SL resource. For example, the slot#X1 and the slot#X2 may be the at least one first slot. For example, the slot#X1 and the slot#X2 may be determined based on a number of periods corresponding to a specific configured value from the at least one candidate slot. For example, the periods may be periods of transmission resources configured in a resource pool. For example, the resource (slot#X1, slot#X2) may be sensed at a time that is temporally earlier than a time of the candidate resource for which the resource conflict is to be determined by an integer multiple k value of each of the periods. For example, the k value may be configured in the form of a bitmap. For example, the at least one first slot may be a slot on which sensing is performed prior to a time (slot n) at which resource (re)selection is triggered.

For example, the first UE may receive at least one PSCCH and at least one PSSCH based on at least one second slot. For example, the slot #XN may be the at least one second slot.

For example, the first UE may obtain a CBR value based on the SL RSSI measured on the at least one first slot and the at least one second slot.

For example, the CBR value may be obtained based on a first CBR measurement window with a pre-configured length including the slot#X1, the slot#X2, and the slot#XN.

For example, a parameter related to CBR may be configured based on a number of slots (e.g., three) on which the SL RSSI is measured within the first CBR measurement window.

For example, a CBR value for slots on which the SL RSSI is not measured within the first CBR measurement window may be obtained based on an SL RSSI measurement value related to a second CBR measurement window. For example, the slots on which the SL RSSI is not measured within the first CBR measurement window may be slots from the slot#X1 to the slot#XN excluding the slot#X1, the slot#X2, and the slot#XN. For example, the second CBR measurement window may be the previous CBR measurement window that is closest in a time domain to the first CBR measurement window. For example, the second CBR measurement window may be a window on which the CBR measurement was performed in the past. For example, the second CBR measurement window may be a window on which the SL RSSI is measured for a number of slots greater than or equal to a pre-configured threshold. For example, a CBR value for slots on which the SL RSSI is not measured within the first CBR measurement window may be obtained based on an SL RSSI measurement value for slots in the same location as slots on which the SL RSSI is not measured within the second CBR measurement window. For example, the same location may include at least one of the same index or the same sequence number. For example, the CBR value for slots excluding the slot#X1, the slot#X2, and the slot#XN from the slot#X1 to the slot#XN on which the SL RSSI is not measured within the first CBR measurement window may be obtained based on the SL RSSI measurement for slots excluding the slot#1, the slot#2, and the slot#N from the slot#1 to the slot#N in the same location within the second CBR measurement window.

For example, a CBR value for slots on which the SL RSSI is not measured within the first CBR measurement window may be obtained based on SL RSSI measurement values related to a pre-configured number of second CBR measurement windows. For example, the CBR value for slots on which the SL RSSI is not measured within the first CBR measurement window may be obtained based on an average value of the SL RSSI measurement values for the pre-configured number of second CBR measurement windows. For example, the CBR value for slots on which the SL RSSI is not measured within the first CBR measurement window may be obtained based on a maximum value of the SL RSSI measurement values for the pre-configured number of second CBR measurement windows. For example, the CBR value for slots on which the SL RSSI is not measured within the first CBR measurement window may be obtained based on a minimum value of the SL RSSI measurement values for the pre-configured number of second CBR measurement windows.

Additionally, for example, for SL CBR measurement in partial sensing, the SL RSSI may be measured for slots in which the UE performs partial sensing and PSCCH/PSSCH reception over an SL CBR measurement window defined in Rel-16. For example, the calculation of the SL CBR may be limited within the slots in which the SL RSSI is measured.

For example, if the number of slots on which the SL RSSI is measured is below a (pre-configured) threshold, a (pre-configured) SL CBR value may be used.

For example, if the number of slots on which the SL RSSI is measured is below a (pre-configured) threshold, the UE may further measure a set of slots within an SL CBR measurement window that satisfy the (pre-configured) threshold.

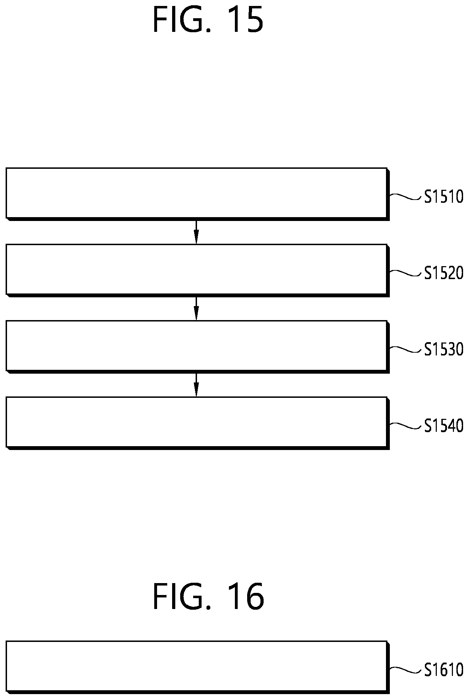

FIG. 15 shows a method for a first device to obtain a CBR value, based on an embodiment of the present disclosure. The embodiment of FIG. 15 may be combined with various embodiments of the present disclosure.

Referring to FIG. 15, in step S1510, the first device 100 may determine at least one candidate slot for selecting a sidelink (SL) resource.

In step S1520, the first device 100 may perform sensing on at least one first slot related to the at least one candidate slot.

In step S1530, the first device 100 may receive at least one physical sidelink shared channel (PSCCH) and at least one physical sidelink shared channel (PSSCH) based on at least one second slot.

In step S1540, the first device 100 may obtain a channel busy ratio (CBR) value based on SL received signal strength indicator (RSSI) measured on the at least one first slot and the at least one second slot.

For example, the CBR value may be obtained based on a first CBR measurement window with a pre-configured length including the at least one first slot and the at least one second slot.

For example, a parameter related to CBR may be configured based on a number of slots on which SL RSSI is measured within the first CBR measurement window.

For example, the CBR value may be obtained based on that SL RSSI is measured on a number of slots greater than or equal to a pre-configured threshold within the first CBR measurement window.

For example, a default CBR value may be used based on that SL RSSI is measured on a number of slots greater than or equal to a pre-configured threshold within the first CBR measurement window.

For example, based on that SL RSSI is measured on a number of slots greater than or equal to a pre-configured threshold within the first CBR measurement window, an average value of a default CBR value and the CBR value obtained based on the first CBR measurement window may be used.

For example, a CBR value for slots on which SL RSSI is not measured within the first CBR measurement window may be obtained based on an SL RSSI measurement value related to a second CBR measurement window. For example, the second CBR measurement window may be a previous CBR measurement window that is closest in a time domain to the first CBR measurement window. For example, the second CBR measurement window may be a window on which SL RSSI is measured on a number of slots greater than or equal to a pre-configured threshold.

For example, a CBR value for slots on which SL RSSI is not measured within the first CBR measurement window may be obtained based on an SL RSSI measurement value for slots in the same location as slot on which SL RSSI is not measured within the second CBR measurement window. For example, the same location may include at least one of the same index or the same sequence number.

For example, a CBR value for slots on which SL RSSI is not measured within the first CBR measurement window may be obtained based on SL RSSI measurement values related to a pre-configured number of second CBR measurement windows. For example, the second CBR measurement window may be a previous CBR measurement window that is closest in a time domain to the first CBR measurement window. For example, the CBR value for the slots for the slots on which SL RSSI is not measured within the first CBR measurement window may be obtained based on an average value of the SL RSSI measurement values for the pre-configured number of second CBR measurement windows.

For example, the length of the first CBR measurement window may be determined based on the type of the first device 100. For example, the type of the first device 100 may include a vehicle UE and a roadside unit (RSU).

For example, the length of the first CBR measurement window may be determined in units of logical slots.

For example, the at least one second slot may include a slot that is included in an inactive time duration related to SL discontinuous reception (DRX) at a first time. For example. at a second time, the inactive time related to SL DRX may transition to an active time. For example, the second time may be a time when the at least one PSCCH and the at least one PSSCH are received.

The above embodiments can be applied to devices described below. For example, the processor 102 of the first device 100 may determine at least one candidate slot for selecting an SL resource. In addition, for example, the processor 102 of the first device 100 may perform sensing on at least one first slot related to the at least one candidate slot. In addition, for example, the processor 102 of the first device 100 may control the transceiver 106 to receive at least one PSCCH and at least one PSSCH based on at least one second slot.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

Based on an embodiment of the present disclosure, a non-transitory computer-readable storage medium storing instructions may be provided. For example, the instructions, when executed, may cause a first device to: determine at least one candidate slot for selecting a sidelink (SL) resource; perform sensing on at least one first slot related to the at least one candidate slot; receive at least one physical sidelink shared channel (PSCCH) and at least one physical sidelink shared channel (PSSCH) based on at least one second slot; and obtain a channel busy ratio (CBR) value based on SL received signal strength indicator (RSSI) measured on the at least one first slot and the at least one second slot.

FIG. 16 shows a method for a second device to transmit at least one PSCCH and at least one PSSCH, based on an embodiment of the present disclosure. The embodiment of FIG. 16 may be combined with various other embodiments of the present disclosure.

Referring to FIG. 16, in step S1610, the second device 200 may transmit at least one physical sidelink shared channel (PSCCH) and at least one physical sidelink shared channel (PSSCH) to the first device 100 based on at least one second slot.

For example, at least one candidate slot for selecting a sidelink resource may be determined. For example, sensing on at least one first slot related to the at least one candidate slot may be performed. For example, a channel busy ratio (CBR) value may be obtained based on received signal strength indicator (SL RSSI) measured on the at least one first slot and the at least one second slot.

For example, the CBR value may be obtained based on a first CBR measurement window with a pre-configured length including the at least one first slot and the at least one second slot.

For example, a parameter related to CBR may be configured based on a number of slots on which SL RSSI is measured within the first CBR measurement window.

For example, the CBR value may be obtained based on that SL RSSI is measured on a number of slots greater than or equal to a pre-configured threshold within the first CBR measurement window.

For example, a default CBR value may be used based on that SL RSSI is measured on a number of slots greater than or equal to a pre-configured threshold within the first CBR measurement window.

For example, based on that SL RSSI is measured on a number of slots greater than or equal to a pre-configured threshold within the first CBR measurement window, an average value of a default CBR value and the CBR value obtained based on the first CBR measurement window may be used.

For example, a CBR value for slots on which SL RSSI is not measured within the first CBR measurement window may be obtained based on an SL RSSI measurement value related to a second CBR measurement window. For example, the second CBR measurement window may be a previous CBR measurement window that is closest in a time domain to the first CBR measurement window. For example, the second CBR measurement window may be a window on which SL RSSI is measured on a number of slots greater than or equal to a pre-configured threshold.

For example, a CBR value for slots on which SL RSSI is not measured within the first CBR measurement window may be obtained based on an SL RSSI measurement value for slots in the same location as slot on which SL RSSI is not measured within the second CBR measurement window. For example, the same location may include at least one of the same index or the same sequence number.

For example, a CBR value for slots on which SL RSSI is not measured within the first CBR measurement window may be obtained based on SL RSSI measurement values related to a pre-configured number of second CBR measurement windows. For example, the second CBR measurement window may be a previous CBR measurement window that is closest in a time domain to the first CBR measurement window. For example, the CBR value for the slots for the slots on which SL RSSI is not measured within the first CBR measurement window may be obtained based on an average value of the SL RSSI measurement values for the pre-configured number of second CBR measurement windows.

For example, the length of the first CBR measurement window may be determined in units of logical slots.

For example, the at least one second slot may include a slot that is included in an inactive time duration related to SL discontinuous reception (DRX) at a first time. For example. at a second time, the inactive time related to SL DRX may transition to an active time. For example, the second time may be a time when the at least one PSCCH and the at least one PSSCH are received.

The above embodiments can be applied to devices as described below. First, for example, the processor 202 of the second device 200 may control the transceiver 206 to transmit at least one PSCCH and at least one PSSCH to the first device 100 based on at least one second slot.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: transmit, to a first device, at least one physical sidelink shared channel (PSCCH) and at least one physical sidelink shared channel (PSSCH) based on at least one second slot. For example, at least one candidate slot for selecting a sidelink (SL) resource may be determined. For example, sensing on at least one first slot related to the at least one candidate slot may be performed. For example, a channel busy ratio (CBR) value may be obtained based on SL received signal strength indicator (RSSI) measured on the at least one first slot and the at least one second slot.

Various embodiments of the present disclosure may be combined with each other.

Various embodiments of the present disclosure may be implemented independently. Alternatively, various embodiments of the present disclosure may be implemented in combination with or merged with each other. For example, various embodiments of the present disclosure have been described based on the 3GPP system for convenience of description, but various embodiments of the present disclosure may be extendable to systems other than the 3GPP system. For example, various embodiments of the present disclosure are not limited only to direct communication between UEs, and may be used in uplink or downlink, and in this case, a base station or a relay node may use the method proposed according to various embodiments of the present disclosure. For example, information related to whether the method according to various embodiments of the present disclosure is applied may be provided by the base station to the UE or the second device 200 to the receiving UE using a predefined signal (e.g., a physical layer). signal or higher layer signal). For example, information related to rules according to various embodiments of the present disclosure may be defined such that the base station may notify the terminal or the second device 200 to the receiving UE through a pre-defined signal (e.g., a physical layer signal or a higher layer signal).

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

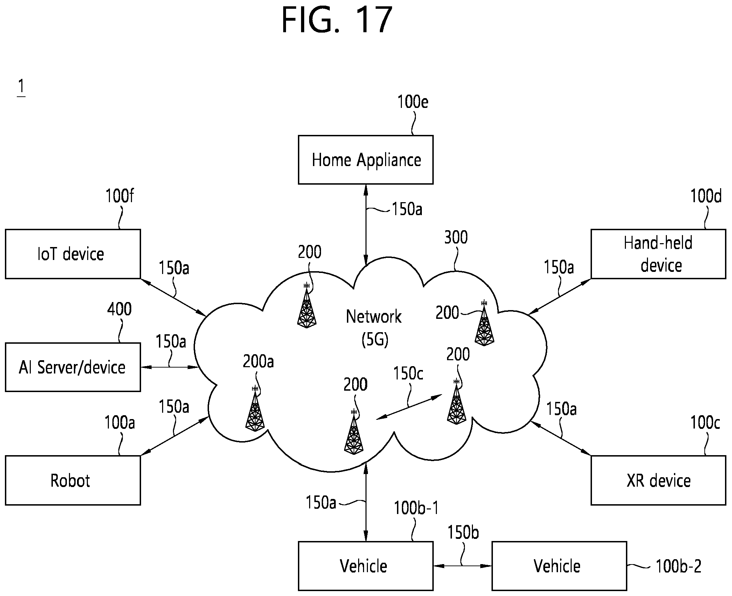

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

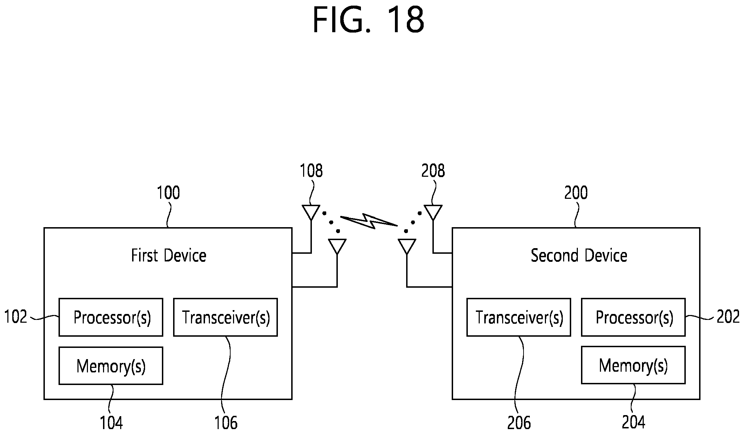

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

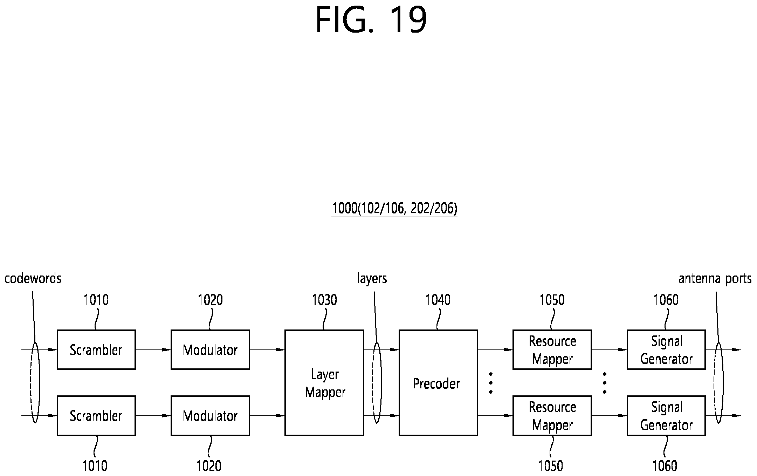

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

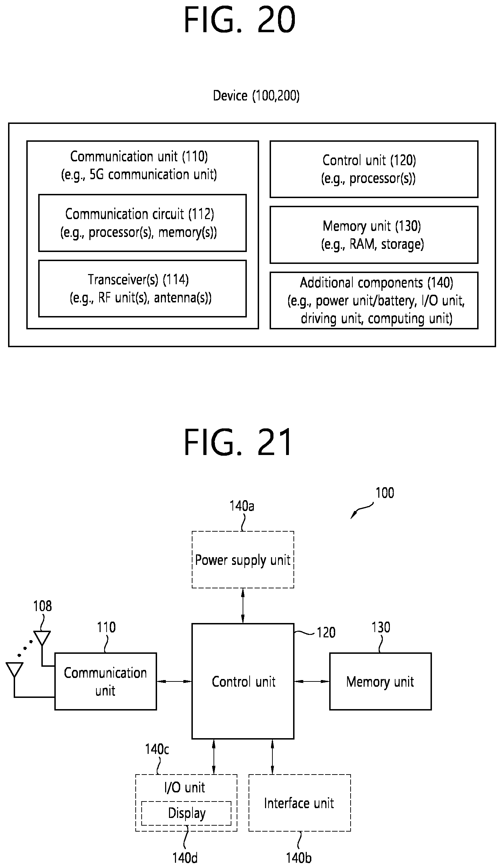

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

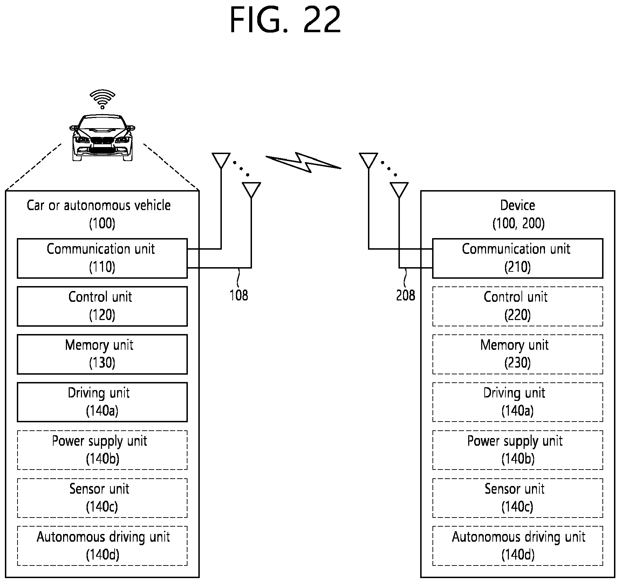

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   determining at least one candidate slot for selecting a sidelink (SL) resource;
   performing sensing on at least one first slot related to the at least one candidate slot;
   receiving at least one physical sidelink shared channel (PSCCH) and at least one physical sidelink shared channel (PSSCH) based on at least one second slot; and
   obtaining a channel busy ratio (CBR) value based on SL received signal strength indicator (RSSI) measured on the at least one first slot and the at least one second slot.

2. The method of claim 1, wherein the CBR value is obtained based on a first CBR measurement window with a pre-configured length including the at least one first slot and the at least one second slot.

3. The method of claim 2, wherein a parameter related to CBR is configured based on a number of slots on which SL RSSI is measured within the first CBR measurement window.

4. The method of claim 2, wherein a default CBR value is used based on that SL RSSI is measured on a number of slots less than a pre-configured threshold within the first CBR measurement window.

5. The method of claim 2, wherein, based on that SL RSSI is measured on a number of slots less than a pre-configured threshold within the first CBR measurement window, an average value of a default CBR value and the CBR value obtained based on the first CBR measurement window are used.

6. The method of claim 2, wherein a CBR value for slots on which SL RSSI is not measured within the first CBR measurement window is obtained based on an SL RSSI measurement value related to a second CBR measurement window, and
wherein the second CBR measurement window is a previous CBR measurement window that is closest in a time domain to the first CBR measurement window.

7. The method of claim 6, wherein the second CBR measurement window is a window on which SL RSSI is measured on a number of slots greater than or equal to a pre-configured threshold.

8. The method of claim 7, wherein the CBR value for the slots on which SL RSSI is not measured within the first CBR measurement window is obtained based on the SL RSSI measurement value on slots in a same location as slots on which SL RSSI is not measured within the second CBR measurement window, and
wherein the same location includes at least one of a same index or a same sequence.

9. The method of claim 2, wherein a CBR value for slots on which SL RSSI is not measured within the first CBR measurement window is obtained based on SL RSSI measurement values related to a pre-configured number of second CBR measurement windows, and
wherein the second CBR measurement windows are previous CBR measurement windows that are closest in a time domain to the first CBR measurement window.

10. The method of claim 9, wherein the CBR value for the slots on which SL RSSI is not measured within the first CBR measurement window is obtained based on an average value of the SL RSSI measurement values for the pre-configured number of second CBR measurement windows.

11. The method of claim 2, wherein a length of the first CBR measurement window is determined based on a type of the first device, and
wherein the type of the first device includes a vehicle UE and a roadside unit (RSU).

12. The method of claim 2, wherein a length of the first CBR measurement window is determined in units of logical slots.

13. The method of claim 1, wherein the at least one second slot is a slot included in an active time duration related to SL discontinuous reception (DRX), and
wherein the sensing is partial sensing.

14. A first device adapted to perform wireless communication, the first device comprising:

    one or more memories storing instructions;
    one or more transceivers; and
    one or more processors connected to the one or more memories and the one or more transceivers, wherein the one or more processors execute the instructions to:

        determine at least one candidate slot for selecting a sidelink (SL) resource;
        perform sensing on at least one first slot related to the at least one candidate slot;
        receive at least one physical sidelink shared channel (PSCCH) and at least one physical sidelink shared channel (PSSCH) based on at least one second slot; and
        obtain a channel busy ratio (CBR) value based on SL received signal strength indicator (RSSI) measured on the at least one first slot and the at least one second slot.

**15.** An apparatus adapted to control a first user equipment (UE), the apparatus comprising:

one or more processors; and
one or more memories operably connected to the one or more processors and storing instructions, wherein the one or more processors execute the instructions to:

determine at least one candidate slot for selecting a sidelink (SL) resource;
perform sensing on at least one first slot related to the at least one candidate slot;
receive at least one physical sidelink shared channel (PSCCH) and at least one physical sidelink shared channel (PSSCH) based on at least one second slot; and
obtain a channel busy ratio (CBR) value based on SL received signal strength indicator (RSSI) measured on the at least one first slot and the at least one second slot.

**16.** A non-transitory computer-readable storage medium storing instructions that, when executed, cause a first device to:

determine at least one candidate slot for selecting a sidelink (SL) resource;
perform sensing on at least one first slot related to the at least one candidate slot;
receive at least one physical sidelink shared channel (PSCCH) and at least one physical sidelink shared channel (PSSCH) based on at least one second slot; and
obtain a channel busy ratio (CBR) value based on SL received signal strength indicator (RSSI) measured on the at least one first slot and the at least one second slot.

**17.** A method for performing wireless communication by a first device, the method comprising:

transmitting, to a first device, at least one physical sidelink shared channel (PSCCH) and at least one physical sidelink shared channel (PSSCH) based on at least one second slot,
wherein at least one candidate slot for selecting a sidelink (SL) resource is determined,
wherein sensing on at least one first slot related to the at least one candidate slot is performed, and
wherein a channel busy ratio (CBR) value is obtained based on SL received signal strength indicator (RSSI) measured on the at least one first slot and the at least one second slot.

**18.** The method of claim 17, wherein the CBR value is obtained based on a first CBR measurement window with a pre-configured length including the at least one first slot and the at least one second slot.

**19.** A second device adapted to perform wireless communication, the second device comprising:

one or more memories storing instructions;
one or more transceivers; and
one or more processors connected to the one or more memories and the one or more transceivers, wherein the one or more processors execute the instructions to:

transmit, to a first device, at least one physical sidelink shared channel (PSCCH) and at least one physical sidelink shared channel (PSSCH) based on at least one second slot,
wherein at least one candidate slot for selecting a sidelink (SL) resource is determined,
wherein sensing on at least one first slot related to the at least one candidate slot is performed, and
wherein a channel busy ratio (CBR) value is obtained based on SL received signal strength indicator (RSSI) measured on the at least one first slot and the at least one second slot.

**20.** The second device of claim 19, wherein the CBR value is obtained based on a first CBR measurement window with a pre-configured length including the at least one first slot and the at least one second slot.

# FIG. 1

Evolution to 5G,
while maintaining backward compatibility

Advanced use cases
5G V2X R16

Enhanced safety
C-V2X R14/15

Higher throughput

Higher reliability

Wideband raging
and positioning

Lower latency

Basic safety
802.11p or C-V2X R14

Enhanced range and reliability

| Vehicle Platooning | Extended Sensors |
|---|---|
| Remote Driving | Advanced Driving |

EP 4 280 674 A1

# FIG. 2

# FIG. 3

(a)

(b)

(c)

(d)

PC5-U

PC5-C

EP 4 280 674 A1

# FIG. 4

| One Frame (10ms) |
| --- |

| Half-Frame (5ms) | Half-Frame (5ms) |
| --- | --- |

| Subframe 0 (1ms) | Subframe 4 (1ms) | Subframe 5 (1ms) | Subframe 9 (1ms) |
| --- | --- | --- | --- |

Subframe (1ms)

| 15KHz | Slot 0 (14symbols) |
| --- | --- |

1ms

| 30KHz | Slot 0 (14symbols) | Slot 1 |
| --- | --- | --- |

500us

| 60KHz | Slot 0 (14symbols) | Slot 1 | Slot 2 | Slot 3 |
| --- | --- | --- | --- | --- |

250us

| 120KHz | Slot 0 (14symbols) | Slot 1 | Slot 2 | Slot 3 | Slot 4 | Slot 5 | Slot 6 | Slot 7 |
| --- | --- | --- | --- | --- | --- | --- | --- | --- |

125us

FIG. 5

# FIG. 6

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

$N_{BWP, 2}^{start}$

$N_{BWP, 1}^{start}$

$N_{BWP, 0}^{start}$

Carrier Bandwidth

Freq.

Time

PRB 0 (Point A) in reference resource block

# FIG. 7

BS(e.g. eNB or gNB)

UE 1                    UE 2

# FIG. 8

(a)                              (b)

# FIG. 9

(a)　　　　　(b)　　　　　(c)

●: TX UE

⊘: RX UE

# FIG. 10

(a)

: PSSCH      : PSCCH

(b)

: PSSCH      : PSCCH

(c)

: PSSCH      : PSCCH

# FIG. 11

# FIG. 12

```
┌──────────┐                      ┌───────────┐
│ first UE │                      │ second UE │
└──────────┘                      └───────────┘
     │                                  │
┌──────────────────────────────┐        │
│ determine at least one candidate slot │ ⟿ S1210
└──────────────────────────────┘        │
     │                                  │
┌──────────────────────────────┐        │
│      perform sensing on        │ ⟿ S1220
│    at least one first slot     │        │
└──────────────────────────────┘        │
     │            PSCCH/PSSCH           │
     │◄─────────────────────────────────│ ⟿ S1230
┌──────────────────────────────┐        │
│       obtain CBR value         │ ⟿ S1240
└──────────────────────────────┘        │
     │                                  │
```

# FIG. 13

first CBR measurement window

slot#X1    slot#X2    ...    slot#Z1    resource selection    slot#Y1    slot#Y2    ...

Frequency

Time

resource selection

☐ : slot on which sensing is performed

▦ : candidate slot

▨ : PSCCH/PSSCH reception slot

EP 4 280 674 A1

# FIG. 14

EP 4 280 674 A1

# FIG. 15

S1510

S1520

S1530

S1540

# FIG. 16

S1610

# FIG. 17

EP 4 280 674 A1

# FIG. 18

EP 4 280 674 A1

# FIG. 19

1000(102/106, 202/206)

# FIG. 20

Device (100,200)

# FIG. 21

# FIG. 22

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2022/000819** |

| A. | CLASSIFICATION OF SUBJECT MATTER |
|---|---|

**H04W 28/02**(2009.01)i; **H04W 28/26**(2009.01)i; **H04W 72/02**(2009.01)i; **H04W 74/08**(2009.01)i; **H04W 76/28**(2018.01)i; **H04W 4/40**(2018.01)i; **H04W 92/18**(2009.01)i

According to International Patent Classification (IPC) or to both national classification and IPC

| B. | FIELDS SEARCHED |
|---|---|

Minimum documentation searched (classification system followed by classification symbols)

H04W 28/02(2009.01); H04W 28/08(2009.01); H04W 4/40(2018.01); H04W 72/04(2009.01); H04W 72/08(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL resource, candidate slot, PSCCH, PSSCH, SL RSSI, CBR(channel busy ratio), CBR 측정 윈도우(CBR measurement window), default CBR, 평균(average), type, 길이(length), partial sensing

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2020-0029245 A1 (INTEL CORPORATION) 23 January 2020 (2020-01-23) See paragraphs [0037]-[0236]; claims 26-31; and figures 7-8. | 1-3,11-20 |
| A | | 4-10 |
| Y | CMCC. Discussion on resource allocation for power saving. R1-2008031, 3GPP TSG RAN WG1 #103-e, e-Meeting. 01 November 2020. See section 2.1; and figure 2. | 1-3,11-20 |
| Y | US 2020-0351705 A1 (COMCAST CABLE COMMUNICATIONS, LLC) 05 November 2020 (2020-11-05) See paragraphs [0388]-[0409]. | 1-3,11-20 |
| A | US 2020-0359257 A1 (LG ELECTRONICS INC.) 12 November 2020 (2020-11-12) See paragraphs [0058]-[0084]; and claim 1. | 1-20 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2022** | **28 April 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/000819**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0093517 A (LG ELECTRONICS INC.) 05 August 2020 (2020-08-05) See paragraphs [0102]-[0113]; and claims 1 and 5-8. | 1-20 |

<table>
<tr><td colspan="2" align="center"><strong>INTERNATIONAL SEARCH REPORT</strong><br>Information on patent family members</td><td colspan="2">International application No.<br><strong>PCT/KR2022/000819</strong></td></tr>
</table>

| Patent document cited in search report | | | Publication date (day/month/year) | Patent family member(s) | | | Publication date (day/month/year) |
|---|---|---|---|---|---|---|---|
| US | 2020-0029245 | A1 | 23 January 2020 | EP | 3577967 | A1 | 11 December 2019 |
| | | | | US | 11026120 | B2 | 01 June 2021 |
| | | | | WO | 2018-145067 | A1 | 09 August 2018 |
| US | 2020-0351705 | A1 | 05 November 2020 | CA | 3080047 | A1 | 02 November 2020 |
| | | | | EP | 3734894 | A1 | 04 November 2020 |
| US | 2020-0359257 | A1 | 12 November 2020 | WO | 2019-103322 | A1 | 31 May 2019 |
| KR | 10-2020-0093517 | A | 05 August 2020 | CN | 111727575 | A | 29 September 2020 |
| | | | | EP | 3706348 | A1 | 09 September 2020 |
| | | | | JP | 2021-514550 | A | 10 June 2021 |
| | | | | US | 2020-0288435 | A1 | 10 September 2020 |
| | | | | WO | 2020-153812 | A1 | 30 July 2020 |

Form PCT/ISA/210 (patent family annex) (July 2019)